# EUROPEAN PATENT APPLICATION

(11) **EP 4 462 252 A1**
(43) Date of publication of application: **13.11.2024**
(21) Application number: 23844908.6
(22) Date of filing: 18.04.2023
(51) Int. Cl.: G06F 9/451

(54) **DISPLAY METHOD AND ELECTRONIC DEVICE**

(30) Priority: 28.07.2022 CN 202210904347
(71) Applicant: Honor Device Co., Ltd., Shenzhen, Guangdong 518040 (CN)
(72) Inventor: HUANG, Liwei, Shenzhen, Guangdong 518040 (CN); JIAO, Junting, Shenzhen, Guangdong 518040 (CN)
(74) Representative: Gill Jennings & Every LLP
(86) International application number: PCT/CN2023/088873
(87) International publication number: WO 2024/021691

(57) **Abstract**

This application provides a display method and an electronic device. The electronic device may dynamically display, according to an actual requirement of a user in a current scenario, an application and a service card that may be used by the user in the current scenario, to help the user more quickly locate an application that the user needs to browse.

## Description

This application claims priority to Chinese Patent Application No. 202210904347.3, filed with the China National Intellectual Property Administration on July 28, 2022 and entitled "DISPLAY METHOD AND ELECTRONIC DEVICE", which is incorporated herein by reference in its entirety.

### TECHNICAL FIELD

This application relates to the field of terminal technologies, and in particular, to a display method and an electronic device.

### BACKGROUND

With the rapid development of electronic technologies, electronic devices such as mobile phones, tablets, and computers have become indispensable tools in people's lives and work. According to statistics, people check mobile phones about 150 times a day. However, in most cases, a user checks a screen of a mobile phone with a determined purpose, for example, checking a schedule and opening Alipay for payment to a merchant.

However, currently, a presentation form of a desktop of an electronic device is relatively monotonous. When applications APPs on a device become increasingly complex and functions of the applications APPs become increasingly rich, the user often needs to spend a large amount of time searching for an application APP that the user needs to open. This undoubtedly wastes time of the user and lowers user experience. Therefore, a more convenient display interface needs to be designed for the electronic device.

### SUMMARY

This application aims at providing a display method and an electronic device. The electronic device may dynamically display, according to an actual requirement of a user in a current scenario, an application and a service card that may be used by the user in the current scenario, to help the user more quickly locate an application that the user needs to browse, thereby providing better user experience.

The above and other objects will be achieved based on features in the independent claims. Further implementations are embodied in the dependent claims, the specification, and the accompanying drawings.

According to a first aspect, this application provides a display method. The method is applied to an electronic device. The method includes: displaying a first desktop in a first scenario, where the first desktop includes a plurality of first application icons and at least one first card; and recognizing that the first scenario changes to a second scenario, and displaying a second desktop, where the second desktop includes a plurality of second application icons and at least one second card, and the plurality of second application icons are different from the plurality of first application icons, and/or the at least one second card is different from the at least one first card.

In this method, content displayed on the first desktop, that is, an application icon and a card on the desktop, is determined based on the first scenario. In other words, the plurality of first application icons indicate applications that the user may need to browse or open in the first scenario, and the at least one first card is a card generated by an application that the user may need to browse or open in the first scenario. An application and a service card that may be used by the user in a current scenario are displayed according to an actual requirement of the user in the current scenario, to help the user more quickly locate an application that the user needs to browse, thereby saving time for the user.

In addition, it may be understood that, in most cases, the user checks a screen of a mobile phone with a determined purpose, and the purpose may be strongly related to factors such as a time, a location, and a personal use preference of the user. For example, the user usually checks a schedule in the morning and opens applications such as Games and Health in the evening. For another example, the user usually opens a passenger QR code near a bus station, and opens a payment code at a store. Therefore, in this implementation, when a scenario changes, content displayed on the desktop of the electronic device also changes as the scenario changes. In this way, the electronic device may dynamically display, based on the scenario, an application and a service card that may be used by the user in the current scenario, to further improve user experience.

With reference to the first aspect, in a possible implementation, the first desktop includes a first dock region, and the method further includes: receiving a first operation performed on the first dock region; and displaying a third desktop in response to the first operation. The third desktop includes a second dock region. An area of the second dock region is different from an area of the first dock region. When the area of the second dock region is greater than the area of the first dock region, a quantity of application icons in the second dock region is greater than a quantity of application icons in the first dock region; or when the area of the second dock region is less than the area of the first dock region, a quantity of application icons in the second dock region is less than a quantity of application icons in the first dock region.

In this implementation, the at least one first application icon may be divided into two parts, that is, at least one third application icon and a remaining application icon other than the at least one third application. The at least one third application icon is displayed in the dock region. The dock region is usually set in a lower part of the screen of the electronic device. Several application icons may be accommodated in the dock region. Regardless of how the user switches an interface on the screen, the application icons included in the dock region in the interface of the screen remain unchanged, and are always displayed in the current interface. Similarly, when a scenario changes, the electronic device does not update the application icons included in the dock region even if the electronic device updates an application icon in the interface. In other words, if the scenario changes from the first scenario to the second scenario, the electronic device does not update an application icon displayed in the first dock region in the at least one first application, and updates only an application icon displayed outside the first dock region in the at least one first application icon.

In addition, in this implementation, the user may adjust a size of the dock region by using an operation such as a pull-up operation or a pull-down operation, and a quantity of programs that can be accommodated in the dock region also increases accordingly. In this way, the user may put icons of more applications commonly used by the user into the dock region, so that the user can directly and quickly start more applications.

With reference to the first aspect, in a possible implementation, the at least one first application icon of the first desktop includes N application icons located outside the first dock region, and the third desktop includes M application icons located outside the second dock region. When the area of the second dock region is greater than the area of the first dock region, N is greater than M; or when the area of the second dock region is less than the area of the first dock region, N is less than M.

It may be understood that an area size of a screen of the electronic device remains unchanged for the electronic device. Therefore, after the user adjusts the area of the dock region, the electronic device may adaptively add or delete an application icon outside the dock region to provide the user with better visual experience. For example, after the user enlarges the first dock region to obtain the second dock region, the electronic device may reduce application icons in the first dock region that is originally displayed on the first desktop, and display only some of the application icons outside the second dock region on the third desktop.

Optionally, after the user adjusts the area of the first dock region, the electronic device may also adaptively adjust a size of an application icon outside the dock region or change an arrangement manner of an application icon, to provide the user with a better browsing effect.

With reference to the first aspect, in a possible implementation, the third desktop includes at least one third card, the at least one third card is all or a part of cards in the at least one first card, and display manners of the at least one first card and the at least one third card are different.

In this implementation, when the electronic device changes the area of the first dock region, the electronic device may adaptively change a display manner of a card in a card region on a scenario-based desktop. The display manner includes a quantity, a shape, and a card arrangement manner. In this way, the user is provided with a better browsing effect. For example, it is assumed that when the at least one first card includes three cards (referred to as a card 1, a card 2, and a card 3) on the first desktop, after the user enlarges the first dock region (the enlarged dock region is the second dock region), the electronic device may adaptively reduce one or more card areas of the card 1, the card 2, and the card 3 on the third desktop (in this case, the card 1, the card 2, and the card 3 are the at least one third card).

With reference to the first aspect, in a possible implementation, the method further includes: receiving a second operation performed on a fourth card, where the fourth card is any one of the at least one first card; and deleting the fourth card in response to the second operation.

With reference to the first aspect, in a possible implementation, after the receiving a second operation performed on a fourth card, the method further includes: displaying a fourth desktop, where the fourth desktop includes at least one fifth card, and display manners of the at least one fifth card and the at least one first card are different.

In this implementation, the electronic device may delete any one of the at least one card in response to an operation performed by the user on the card. After the deletion, the electronic device may adjust a remaining card (that is, the at least one fifth card) in the at least one card to change a display manner of the at least one fifth card. The display manner includes a quantity, a shape, and a card arrangement manner. In this way, the user is provided with a better browsing effect. For example, it is assumed that when the at least one first card includes three cards (referred to as a card 4, a card 5, and a card 6) on the first desktop, after the user deletes the card 4 (the card 4 in this case is the fourth card), the electronic device may adaptively reduce areas of the card 5 and the card 6 on the fourth desktop (in this case, the card 5 and the card 6 are the at least one fifth card).

With reference to the first aspect, in a possible implementation, the method further includes: receiving a third operation performed on the first desktop; and generating a sixth card in response to the third operation.

With reference to the first aspect, in a possible implementation, the method further includes: displaying a fifth desktop, where the fifth desktop includes at least one seventh card, the at least one seventh card includes the at least one first card and the sixth card, and display manners of the at least one seventh card and the at least one first card are different.

In this implementation, the electronic device may add a card (that is, the sixth card) to the first desktop in response to an operation performed by the user on the first desktop. After the sixth card is added, the sixth card and the at least one card form the at least one seventh card. To ensure the browsing effect of the user, the electronic device may adjust a display manner of a card in the at least one seventh card, that is, change a display manner of the at least one card on the first desktop. The display manner includes a quantity, a shape, and a card arrangement manner. In this way, the user is provided with a better browsing effect. For example, it is assumed that when the at least one first card includes two cards (referred to as a card 7 and a card 8) on the first desktop, after the user adds a card 9 (the card 9 in this case is the sixth card) to the desktop, the electronic device may adaptively reduce areas of the card 7 and the card 8 on the fifth desktop and display cards 7 to 9 on the fifth desktop (in this case, the cards 7 to 9 are the at least one seventh card).

With reference to the first aspect, in a possible implementation, the method further includes: receiving a fourth operation performed on an eighth card, where the eighth card is any one of the at least one first card; and scaling up or down the eighth card in response to the fourth operation.

In this implementation, in response to an operation performed by the user on any one of the at least one card, the electronic device may increase or reduce an area of the card (that is, the eighth card). In this way, when the user has a need, the card can be scaled up so that the user can more clearly browse information about the card; or the card can be scaled down to highlight another more important card.

With reference to the first aspect, in a possible implementation, after the receiving a fourth operation performed on an eighth card, the method further includes: displaying a sixth desktop, where the sixth desktop includes the at least one first card, and display manners of the at least one first card on the sixth desktop and the at least one first card on the first desktop are different.

In this implementation, after the user scales up or down any card (that is, the eighth card) in the at least one card, to ensure the browsing effect of the user, the electronic device may adaptively adjust a display manner of another card in the at least one first card. The display manner includes a quantity, a shape, and a card arrangement manner. In this way, the user is provided with a better browsing effect. For example, it is assumed that when the at least one first card includes two cards (referred to as a card A and a card B) on the first desktop, after the user scales up the card A (the card B in this case is the eighth card), the electronic device may adaptively scale down an area of the card B on the sixth desktop (in this case, the card A and the card B are the at least one first card on the sixth desktop), or no long displays the card B (in this case, the card A is the at least one first card on the sixth desktop).

In an optional implementation, the recognizing that the first scenario changes to a second scenario includes: recognizing that a time changes from a first moment to a second moment, the first moment corresponds to the first scenario, and the second moment corresponds to the second scenario; or recognizing that a location of the electronic device changes from a first location to a second location, where the first location corresponds to the first scenario, and the second location corresponds to the second scenario; or recognizing at a third moment that a user performs a fifth operation on the electronic device, and recognizing at a fourth moment that the user performs a sixth operation on the electronic device, where the fifth operation performed by the user on the electronic device corresponds to the first scenario, and the sixth operation performed by the user on the electronic device corresponds to the second scenario.

In this implementation, a basis for the electronic device to determine a scenario change may include but is not limited to the following:

### 1. Time change

It may be understood that a schedule of the user is very likely to be regular in a common day. For example, most people get up at 7:00 am, need to leave the home and go to the company by taking a car or by driving a car in 8:00 am to 9:00 am, and get home from work after 6:00 pm. Therefore, in this implementation, the electronic device may update content of a scenario-based desktop at different times with reference to a user habit, so that the user can more quickly find an application that needs to be opened at a current time.

### 2. Location change

An application that the user needs to open is usually directly related to a location of the user. For example, the user usually opens a passenger QR code near a bus station, opens a payment code at a store, and enables navigation software and the like on an expressway. Therefore, in this implementation, the electronic device may obtain, in real time, location information of a current environment in which the electronic device is located, and update content of a scenario-based desktop at different locations with reference to the location information, so that the user can more quickly find an application that needs to be opened at a current location.

### 3. A user operation is received.

It may be understood that purposes of two times of checking the electronic device by the user may be related. For example, after the user searches for a nearby theater by using an application "Maps", the user may want to open an application "Douban" or "Meituan" to purchase a movie ticket in a next time that the user checks the electronic device. Therefore, in this embodiment, the electronic device may update content of a scenario-based desktop based on an application or a card that was browsed by the user in a previous time of using the electronic device, and recommend, to the user, a card or an application that meets a current use requirement of the user.

According to a second aspect, an embodiment of this application provides an electronic device. The electronic device includes one or more processors and a memory. The memory is coupled to the one or more processors. The memory is configured to store computer program code. The computer program code includes computer instructions. The one or more processors invoke the computer instructions to enable the electronic device to perform the method in the first aspect or any possible implementation of the first aspect.

According to a third aspect, a chip system is provided. The chip system is applied to an electronic device. The chip system includes one or more processors. The processor is configured to invoke computer instructions, so that the electronic device is enabled to perform the method in the first aspect or any possible implementation of the first aspect.

According to a fourth aspect, a computer-readable storage medium is provided and includes instructions. When the instructions are run on an electronic device, the electronic device is enabled to perform the method in the first aspect or any possible implementation of the first aspect.

For beneficial effects of technical solutions provided by the second aspect to the fourth aspect of this application, refer to the beneficial effects of the technical solutions provided by the first aspect. Details are not described herein again.

### BRIEF DESCRIPTION OF DRAWINGS

FIG. 1A and FIG. 1B are diagrams of desktops of an electronic device according to an embodiment of this application;
FIG. 2A and FIG. 2B are diagrams of desktops of an electronic device according to an embodiment of this application;
FIG. 3 is a diagram of a structure of an electronic device 100 according to an embodiment of this application;
FIG. 4 is a diagram of a scenario-based desktop according to an embodiment of this application;
FIG. 5 is a diagram of a user interface used for desktop selection according to an embodiment of this application;
FIG. 6A, FIG. 6B, FIG. 6C, and FIG. 6D are a diagram of a process of setting a scenario-based desktop according to an embodiment of this application;
FIG. 7A, FIG. 7B, FIG. 7C, and FIG. 7D are a diagram of a process of adjusting a dock region according to an embodiment of this application;
FIG. 8A and FIG. 8B are a diagram of a process of scaling down a card on a scenario-based desktop according to an embodiment of this application;
FIG. 9A and FIG. 9B are a diagram of a process of deleting a card on a scenario-based desktop according to an embodiment of this application;
FIG. 10A and FIG. 10B are a diagram of a process of adding a card on a scenario-based desktop according to an embodiment of this application;
FIG. 11A, FIG. 11B, and FIG. 11C are a diagram of a process of updating desktop content of a scenario-based desktop according to an embodiment of this application;
FIG. 12A, FIG. 12B, and FIG. 12C are a diagram of a process of updating desktop content of a scenario-based desktop according to an embodiment of this application;
FIG. 13A, FIG. 13B, and FIG. 13C are a diagram of a process of updating desktop content of a scenario-based desktop according to an embodiment of this application; and
FIG. 14 is a flowchart of a display method according to an embodiment of this application.

### DESCRIPTION OF EMBODIMENTS

To make a person skilled in the art better understand the technical solutions in embodiments of this application, the following clearly describes the technical solutions in embodiments of this application with reference to the accompanying drawings in embodiments of this application. It is clear that the described embodiments are merely a part rather than all of embodiments of this application.

In the specification, embodiments, claims, and accompanying drawings of this application, the terms "first", "second", "third", and the like are intended to distinguish similar objects but do not necessarily indicate a specific order or sequence. In addition, the terms "include", "have", and any other variant thereof are intended to cover non-exclusive inclusion. For example, a series of steps or units are included. A method, a system, a product, or a device is not necessarily limited to clearly listed steps or units, but may include other steps or units that are not clearly listed and that are inherent to the process, the method, the product, or the device.

For ease of understanding, the following first introduces related terms used in embodiments of this application.

### (1) Dock region/dock bar

The dock region may also be referred to as a dock bar, that is, an abbreviation of a dockbar (dockbar). The dock region is a functional interface that is used to start and switch a running application in a graphical user interface.

The dock region is usually set in a lower part of a screen of an electronic device. Several application icons may be accommodated in the dock region. For most electronic devices, regardless how a user switches an interface on the screen, a size of the dock region in the interface on the screen and an application included in the dock region remain unchanged, and are always displayed in the current interface. Therefore, the dock region may help the user quickly start an application corresponding to an application icon in the dock region. Certainly, for some electronic devices that can display a leftmost screen, when the user switches an interface of the electronic device to the leftmost screen, the dock region may be not displayed on the leftmost screen.

In addition, the user can touch-and-hold any program icon and drag the icon into the dock region. On a conventional electronic device, the size of the dock region is not adjustable. Therefore, a quantity of application icons in the dock region is also limited, and usually cannot exceed five. However, on the electronic device provided in this application, the user may adjust the size of the dock region by using an operation such as a pull-up operation or a pull-down operation, and a quantity of programs that can be accommodated in the dock region also increases, to help the user directly and quickly start more applications. For details, refer to the following embodiments. Details are not described herein.

It should be understood that the "dock region" and the "dock bar" are merely some names used in embodiments of this application, meanings represented by the "dock region" and the "dock bar" are recorded in embodiments of this application, and names of the "dock region" and the "dock bar" are not intended to impose any limitation on this embodiment.

### (2) Application/Service card

The application/service card (hereinafter referred to as a "card") is a new form of displaying page content of an application on a mobile phone. The page content of the application may be placed on the card. The user can directly operate the card to have use experience of the application, to implement a purpose of enjoying a direct service and reducing experience levels. The card can be placed in any position. The user can customize a desktop style of the user.

The card is usually embedded in another application to be displayed as a part of an interface of the application (or an application may be saved in a service center by using an atomic service, so that the application does not need to be installed in this case). The card supports basic interaction functions such as pulling up a page and sending a message. A card user and a card provider do not require permanent operation. When there is a need to add/delete/request to update the card, a card management service pulls up the card provider to obtain card information.

Functions of the card have three features: 1. Easy to see and use: The card can expose content of service information, and avoid user experience problems caused due to a hierarchical jump. 2. Smart and optional: The card can display all-day variable data information, and support a user-defined service card design. The user can set a pattern of the card. 3. Multi-end variable: The card can be adapted to an adaptive attribute of multi-end devices. A service card attribute is supported on a mobile phone, a band, and a tablet.

Currently, electronic devices such as a mobile phone, a tablet, and a computer have become indispensable tools for people in life and work. To meet requirements of the user in work, life, and entertainment, a quantity of applications installed by the user on a device continuously increases. A specific form used for displaying these applications on an interface of the electronic device to improve user experience has become an important part in a product design of the electronic device.

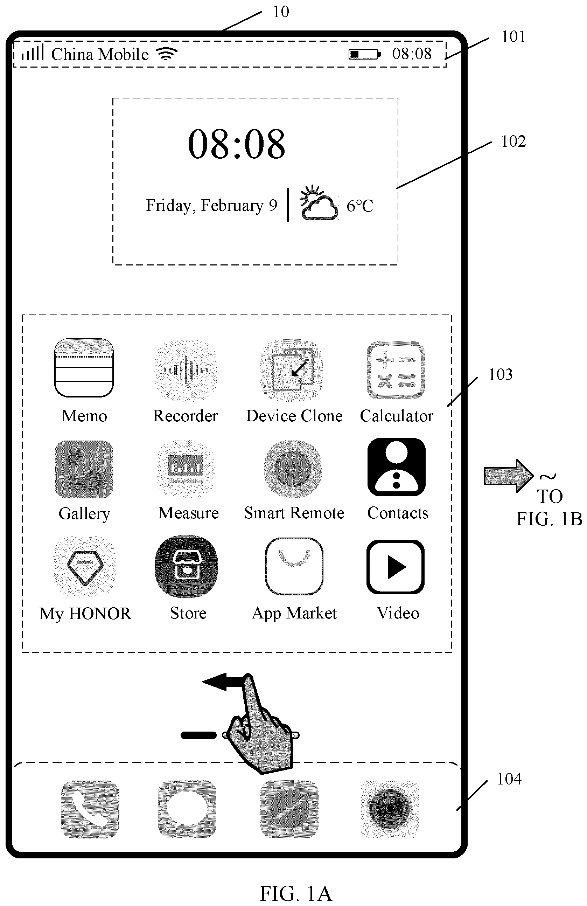

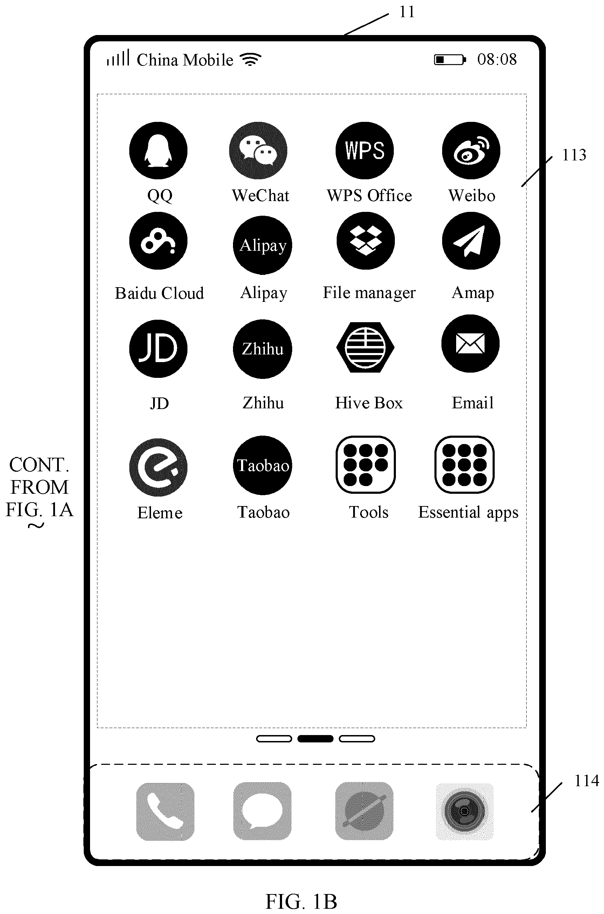

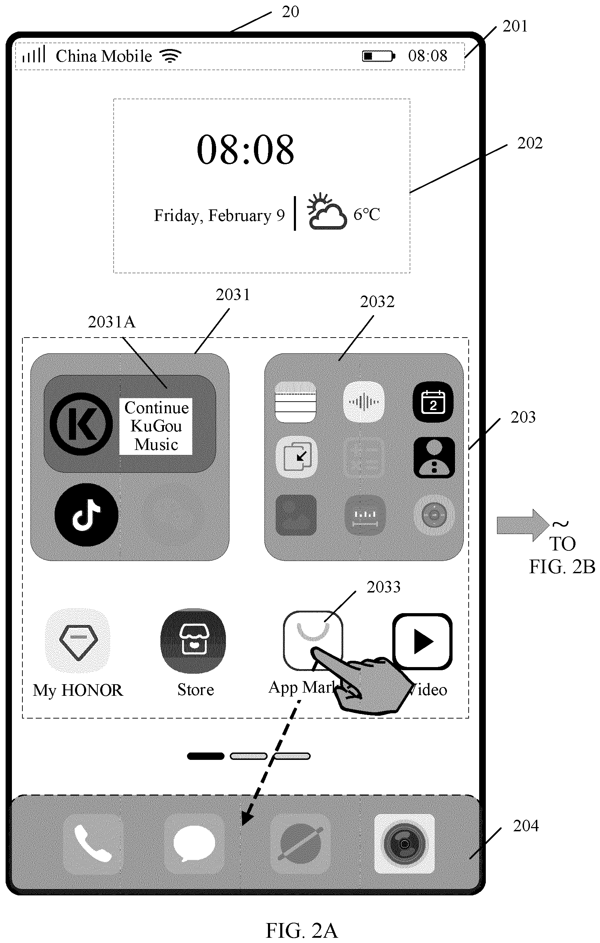

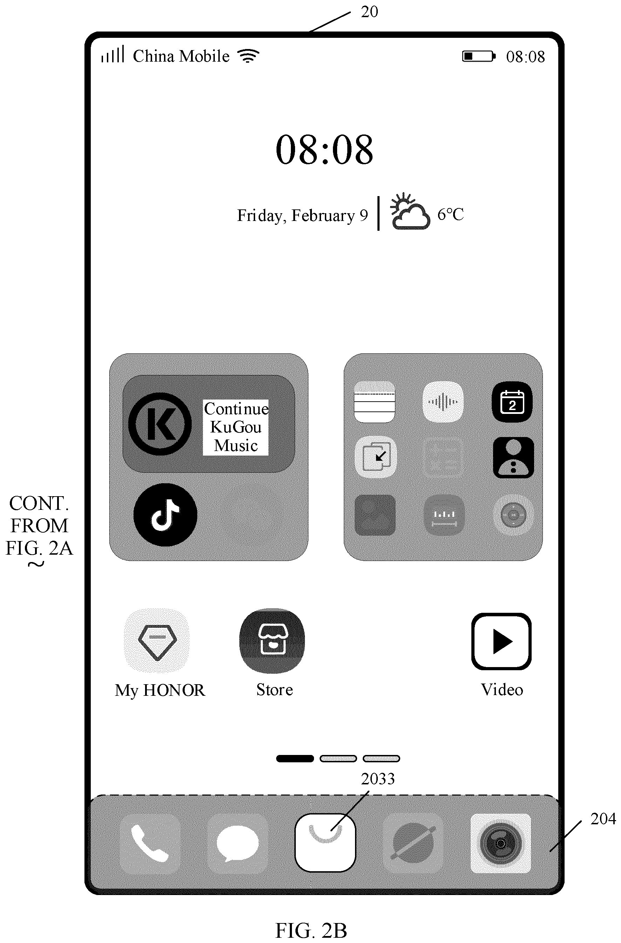

FIG. 1A and FIG. 1B, and FIG. 2A and FIG. 2B separately show two desktop display forms commonly used on current electronic devices.

FIG. 1A and FIG. 1B are diagrams of user interfaces according to an embodiment of this application. As shown in FIG. 1A, FIG. 1A shows an example of a home screen 10 for displaying an application menu on a current electronic device. As shown in FIG. 1A, the home screen 10 includes a status bar 101, a calendar and weather widget 102, an application region 103, and a dock region 104.

The status bar 101 may include a name of an operator (for example, China Mobile), time, a Wi-Fi icon, signal strength, and a current state of charge.

The calendar and weather widget 102 may be used to indicate current time, such as a date, a day of the week, and hour and minute information; the type of weather, such as cloudy to sunny or light rain; information, such as temperature; and a location.

The application region 103 may include, for example, an icon of "Memo", an icon of "Recorder", an icon of "Device Clone", an icon of "Calculator", an icon of "Gallery", an icon of "Measure", an icon of "Smart Remote", and an icon of "Contacts"; and may further include an icon of another application. This is not limited in this embodiment of this application. An icon of any application may be used for responding to a user operation, for example, a touch operation, so that the electronic device starts an application corresponding to the icon.

The dock region 104 may include, for example, an icon of "Phone", an icon of "Messages", an icon of "Browser", and an icon of "Camera"; and may further include an icon of another application. This is not limited in this embodiment of this application. An icon of any application may be used for responding to a user operation, for example, a touch operation, so that the electronic device starts an application corresponding to the icon.

It may be understood that, although not shown, an interface provided in this embodiment of this application and following embodiments may further include a navigation bar. The navigation bar may include system navigation buttons such as a return button, a home screen (home screen) button, and a call out task history button. When detecting that a user taps the return button, the electronic device may display a previous user interface of a current user interface. When detecting that the user taps the home screen button, the electronic device may display a home screen (for example, the home screen 10) set by the user for the electronic device. When detecting that the user taps the call out task history button, the electronic device may display a task recently opened by the user. The navigation buttons may be named in another manner. For example, the foregoing return button may be named a back button, the foregoing home screen button may be named a home button, and the call out task history button may be named a menu button. This is not limited in this application. In addition, the navigation buttons in the navigation bar are not limited to virtual keys, and may be alternatively implemented as physical buttons.

FIG. 2A and FIG. 2B are diagrams of other application interfaces according to an embodiment of this application. As shown in FIG. 2A, FIG. 2A shows an example of a home screen 20 for displaying an application menu on a current electronic device. As shown in FIG. 2A, the home screen 20 includes a status bar 201, a calendar and weather widget 202, an application region 203, and a dock region 204.

For specific functions of the status bar 201, the calendar and weather widget 202, and the dock region 204, refer to the related descriptions of FIG. 1A. Details are not described herein again.

It should be noted that, different from the application region 103 shown in FIG. 1A, the application region 203 shown in FIG. 2A may include an application folder 2031 and an application folder 2032.

The application folder 2031 may include, for example, an icon 2031A of "Kugou^{®}" (Kugou), an icon of "TikTok^{®}" (TikTok), and an icon of "WeChat^{®}" (WeChat). This is not limited in this embodiment of this application. In addition, an icon in the application folder 2031 may be displayed in a form of a card. However, a shape of the card is fixed, for example, the icon 2031A of "Kugou^{®}" (Kugou) shown in FIG. 2A. A user can directly obtain, from a current interface, related information of an application corresponding to the icon. Optionally, the icon in the application folder 2031 may be updated based on a time of using an application on the electronic device by the user. For example, after the user uses an application "QQ" on the electronic device, the icon of "WeChat^{®}" (WeChat) in the application folder 2031 may be updated to an icon of "QQ^{®}" (Tencent QQ).

The application folder 2031 may include icons of a plurality of applications, such as an icon of "Memo", an icon of "Recorder", and an icon of "Calendar". The icons of these applications may be displayed in the application folder 2031 in a pattern of a small icon. The electronic device may display the icons of the applications in the application folder 2031 in a pattern of a large icon in response to a touch operation performed on the application folder 2031, for example, a tap operation. After these small icons are displayed by using large icons, an icon of any application may be used for responding to an operation of the user, for example, a touch operation, so that the electronic device starts the application corresponding to the icon.

With reference to the foregoing description, it may be learned that a dock region displayed on a same electronic device is usually set in a lower part of a screen of the electronic device, and several applications may be accommodated in the dock region. Regardless how the user switches an interface on the screen, a size of the dock region in the interface on the screen and an application included in the dock region remain unchanged, and are always displayed in the current interface.

The home screen 10 and the user interface 11 shown in FIG. 1A and FIG. 1B are used as an example. The electronic device may display the user interface 11 in response to an operation performed by the user on the home screen 10, for example, a leftward sliding operation shown in FIG. 1A. As shown in FIG. 1B, the user interface 11 may include an application region 113 and a dock region 114.

The application region 113 may include an icon of "QQ^{®}" (Tencent QQ), an icon of "WeChat^{®}" (WeChat), an icon of "Weibo^{®}" (Sina Weibo), or the like, and may further include an icon of another application. This is not limited in this embodiment of this application. An icon of any application may be used for responding to a user operation, for example, a touch operation, so that the electronic device starts an application corresponding to the icon.

The dock region 114 includes, for example, an icon of "Phone", an icon of "Messages", an icon of "Browser", and an icon of "Camera". After the user switches the interface displayed on the electronic device from the home screen 10 to the user interface 11, although sizes of the application regions and applications included in the application regions in the two interfaces may be different, sizes of the dock regions (that is, the dock region 104 and the dock region 114) in the two interfaces remain unchanged. In other words, when the user switches the interface on the screen, the size of the dock region in the interface on the screen and the application included in the dock region remain unchanged, and the dock region is always displayed in an interface currently displayed on the electronic device.

In addition, the user can touch-and-hold any program icon and drag the icon into the dock region. However, on a conventional electronic device, the size of the dock region is not adjustable. Therefore, a quantity of applications in the dock region is also limited. For example, the quantity of applications in the dock region usually cannot exceed five. A home screen 20 shown in FIG. 2A is used as an example. The user may touch-and-hold an icon 2033 of the application "App Market" and drag the icon into the dock region 204. As shown in FIG. 2B, in the home screen 20, a dock region 204 may finally include an icon of "Phone", an icon of "Messages", an icon of "Browser", an icon of "Camera", and an icon of App Market. In this case, a quantity of applications that can be accommodated in the dock region 204 is saturated. When an icon in the dock region 204 is not removed, the user cannot subsequently drag, into the dock region 204, an icon of another application outside the dock region 204.

With reference to the foregoing description, it may be learned that the user interfaces shown in FIG. 1A, FIG. 1B, FIG. 2A, and FIG. 2B have a relatively single presentation form. Applications or cards displayed in these interfaces basically remain unchanged. This means that when the user is not familiar with interface content, especially when applications on the electronic device are complex, the user needs to waste a large amount of time to browse a plurality of interfaces to find an application that the user wants to open or browse. In addition, due to features of the dock region, the user usually places, into the dock region, applications that the user needs to frequently use, so that the user can quickly open these applications at any time. However, in the user interfaces shown in FIG. 1A, FIG. 1B, FIG. 2A, and FIG. 2B, a quantity of applications that can be accommodated in the dock region is limited. When a quantity of applications commonly used by the user is greater than a specific quantity, the dock region whose size cannot be changed cannot meet a requirement of the user. This undoubtedly wastes time of the user and lowers user experience.

It is not difficult to understand that, in most cases, the user checks the screen of the mobile phone with a determined purpose, and the purpose may be strongly related to factors such as a time, a location, and a personal use preference of the user. For example, the user usually checks a schedule in the morning, and the user usually opens a passenger QR code near a bus station. Therefore, for example, for the fixed desktop presentation forms shown in FIG. 1A, FIG. 1B, FIG. 2A, and FIG. 2B, this application provides an electronic device. The electronic device may be configured to display a scenario-based desktop. The scenario-based desktop can dynamically display, according to a requirement of a user, an application or a service card that may be used in a current scenario by the user. In addition, a size of a dock region in the foregoing scenario-based desktop is adjustable, to effectively reduce a time of the user in searching for an application that needs to be opened, thereby improving user experience.

The electronic device provided in embodiments of this application is described first.

The electronic device may be a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), a dedicated camera (for example, a digital single lens reflex or a cube camera), or the like. A specific type of the electronic device is not limited in embodiments of this application.

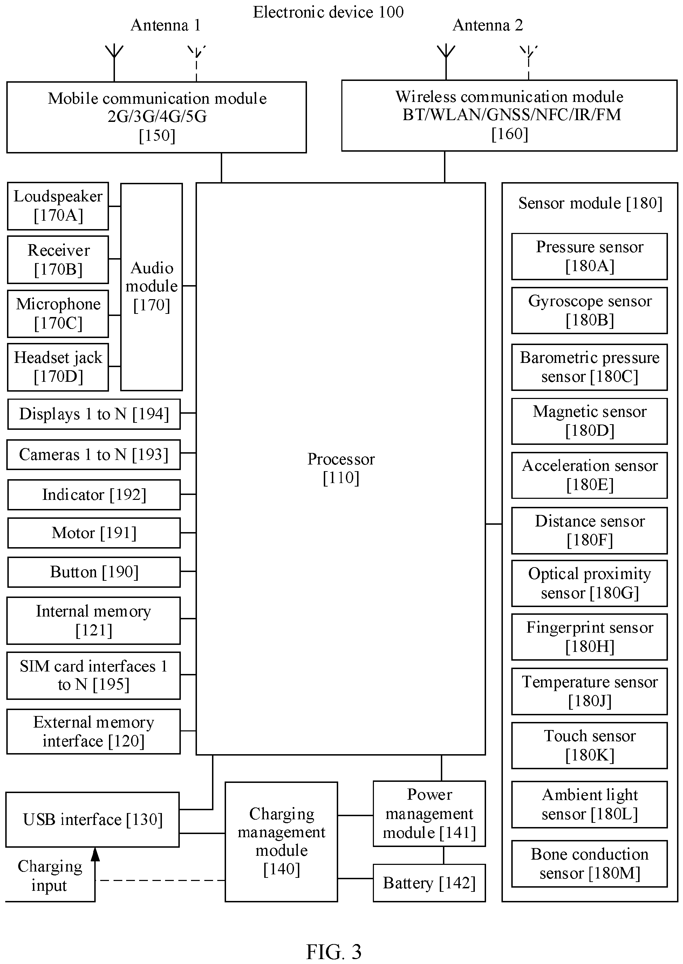

FIG. 3 shows a structure of the electronic device as an example.

As shown in FIG. 3, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a loudspeaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the example structure in this embodiment of the present invention does not constitute a specific limitation on the electronic device 100. In some other embodiments of this application, the electronic device 100 may include more or fewer components than those shown in the figure, or some components may be combined, or some components may be divided, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100. The controller may generate an operation control signal based on instruction operation code and a time sequence signal, to complete control of instruction fetching and instruction execution.

The processor 110 may be further provided with a memory configured to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be coupled to the touch sensor 180K, a charger, a flash light, the camera 193, and the like respectively through different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured to: perform audio communication, and sample, quantize, and encode an analog signal. In some embodiments, the audio module 170 and the wireless communication module 160 may be coupled through the PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using the Bluetooth headset.

The MIPI may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 and the camera 193 communicate with each other through the CSI interface, to implement a photographing function of the electronic device 100. The processor 110 communicates with the display 194 through a DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 and the camera 193, the display 194, the wireless communication module 160, the audio module 170, the sensor module 180, or the like. The GPIO interface may be alternatively configured as an I2C interface, an I2S interface, a UART interface, a MIPI, or the like.

A USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio through the headset. The interface may be alternatively configured to connect to another electronic device, for example, an AR device.

It may be understood that an interface connection relationship between the modules illustrated in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger, or may be a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 may supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may further be configured to monitor parameters such as a battery capacity, a battery cycle count, and a battery state of health (leakage and impedance). In some other embodiments, the power management module 141 may be alternatively disposed in the processor 110. In some other embodiments, the power management module 141 and the charging management module 140 may be alternatively disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover a single communication frequency band or a plurality of communication frequency bands. Different antennas may be further multiplexed, to improve antenna utilization. For example, the antenna 1 may be multiplexed as a diversity antenna in a wireless local area network. In some other embodiments, the antennas may be used in combination with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator sends the low-frequency baseband signal obtained through demodulation to the baseband processor for processing. The low-frequency baseband signal is processed by the baseband processor and then sent to the application processor. The application processor outputs a sound signal through an audio device (which is not limited to the loudspeaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide wireless communication solutions including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing and is connected to the display 194 and the application processor. The GPU is configured to perform mathematical and geometric calculation for graphics rendering. The processor 110 may include one or more GPUs that execute program instructions to generate or change display information.

The display 194 is configured to display an image, a video, and the like. The display 194 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), and the like. In some embodiments, the electronic device 100 may include 1 or N displays 194, where N is a positive integer greater than 1.

The electronic device 100 may implement a photographing function through the ISP, the camera 193, the video codec, the GPU, the display 194, the application processor, and the like.

The ISP is configured to handle data fed back by the camera 193. For example, during photographing, a shutter is open, and light is transmitted to a photosensitive element of the camera through a lens. An optical signal is converted into an electrical signal. The photosensitive element of the camera transfers the electrical signal to the ISP for processing, so that the ISP converts the electrical signal into an image visible to naked eyes. The ISP may further perform algorithm optimization on noise, brightness, and complexion of the image. The ISP may further optimize parameters such as exposure and a color temperature of a to-be-photographed scene. In some embodiments, the ISP may be disposed in the camera 193.

The camera 193 is configured to capture a static image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include 1 or N cameras 193, where N is a positive integer greater than 1.

The digital signal processor is configured to process a digital signal. In addition to a digital image signal, the digital signal processor can further process another digital signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 can play or record videos in a plurality of coding formats such as moving picture experts group (moving picture experts group, MPEG) 1, MPEG2, MPEG3, and MPEG4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100, for example, image recognition, face recognition, speech recognition, and text understanding, may be implemented by using the NPU. The NPU may further be used to implement a decision-making model provided in embodiments of this application.

The external memory interface 120 may be configured to connect to an external storage card such as a micro SD card, to expand a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The computer-executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a voice playing function and an image playing function), and the like. The data storage area may store data (for example, audio data and an address book) and the like created during use of the electronic device 100. In addition, the internal memory 121 may include a high-speed random access memory, and may further include a non-volatile memory, for example, at least one magnetic disk storage device, a flash storage device, or a universal flash storage (universal flash storage, UFS).

The electronic device 100 may implement an audio function by using the audio module 170, the loudspeaker 170A, the receiver 170B, the microphone 170C, the headset jack 170D, the application processor, and the like. The audio function includes, for example, music playing and sound recording.

The audio module 170 is configured to convert digital audio information into an analog audio signal output, and also configured to convert an analog audio input into a digital audio signal. The audio module 170 may be further configured to encode and decode the audio signal. In some embodiments, the audio module 170 may be disposed in the processor 110, or some functional modules in the audio module 170 are disposed in the processor 110.

The loudspeaker 170A, also referred to as "horn", is configured to convert an electrical audio signal into a sound signal. The electronic device 100 may be used to listen to music or answer a hands-free call through the loudspeaker 170A.

The receiver 170B, also referred to as "earpiece", is configured to convert an electrical audio signal into a sound signal. When the electronic device 100 is configured to answer a call or receive voice information, the receiver 170B may be put close to a human ear to receive a voice.

The microphone 170C, also referred to as a "mic" or "mike", is configured to convert a sound signal into an electrical signal. When making a call or sending voice information, a user may make a sound by approaching a mouth to the microphone 170C, to input a sound signal to the microphone 170C. The electronic device 100 may be provided with at least one microphone 170C. In some other embodiments, the electronic device 100 may be provided with two microphones 170C, and may further implement a noise reduction function in addition to collecting a sound signal. In some other embodiments, three, four, or more microphones 170C may be alternatively disposed in the electronic device 100, to collect a sound signal, reduce noise, further recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects touch operation intensity through the pressure sensor 180A. The electronic device 100 may further calculate a touch position based on a detected signal of the pressure sensor 180A. In some embodiments, touch operations that are performed on a same touch position but have different touch operation intensity may correspond to different operation instructions. For example, when a touch operation whose touch operation intensity is less than a first pressure threshold is performed on an application icon of Messages, an instruction for checking a message is executed. When a touch operation whose touch operation intensity is greater than or equal to a first pressure threshold is performed on an application icon of Messages, an instruction for creating a new message is executed.

The gyroscope sensor 180B may be configured to determine a motion posture of the electronic device 100. In some embodiments, angular velocities of the electronic device 100 around three axes (that is, x, y, and z axes) may be determined by using the gyroscope sensor 180B. The gyroscope sensor 180B may be used for image stabilization during photographing. For example, when a shutter is pressed, the gyroscope sensor 180B detects an angle at which the electronic device 100 jitters, calculates, based on the angle, a distance for which a lens module needs to compensate, and allows a lens to cancel the jitter of the electronic device 100 through reverse motion, to implement image stabilization. The gyroscope sensor 180B may be further used in navigation and a motion sensing game scenario.

The barometric pressure sensor 180C is configured to measure barometric pressure. In some embodiments, the electronic device 100 calculates an altitude based on the barometric pressure measured by the barometric pressure sensor 180C, to assist in positioning and navigation.

The magnetic sensor 180D may include a Hall sensor. The electronic device 100 may detect opening and closing of a flip leather cover by using the magnetic sensor 180D. In some embodiments, when the electronic device 100 is a clamshell phone, the electronic device 100 may detect opening and closing of a flip cover based on the magnetic sensor 180D. Further, features such as automatic unlocking of the flip cover are set based on the detected opening and closing states of the leather case or opening and closing states of the flip cover.

The acceleration sensor 180E may detect magnitudes of acceleration of the electronic device 100 in various directions (usually on three axes), and may detect a magnitude and a direction of gravity when the electronic device 100 is static. The acceleration sensor may be further configured to recognize a posture of the electronic device, and is applied to applications such as switching between landscape and portrait modes and a pedometer.

The distance sensor 180F is configured to measure a distance. The electronic device 100 may measure a distance in an infrared manner or a laser manner. In some embodiments, in a photographing scenario, the electronic device 100 may measure a distance by using the distance sensor 180F, to implement quick focusing.

The optical proximity sensor 180G may include, for example, a light emitting diode (LED) and an optical detector, for example, a photodiode. The light-emitting diode may be an infrared light-emitting diode. The electronic device 100 emits infrared light by using the light-emitting diode. The electronic device 100 uses the photodiode to detect reflected infrared light from a nearby object. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to implement automatic screen-off to save power. The optical proximity sensor 180G may be further configured to automatically unlock and lock the screen in a leather cover mode and a pocket mode.

The ambient light sensor 180L is configured to sense ambient light brightness. The electronic device 100 may adaptively adjust brightness of the display 194 based on the perceived ambient light brightness. The ambient light sensor 180L may be further configured to automatically adjust white balance during photographing. The ambient light sensor 180L may also cooperate with the optical proximity sensor 180G to detect whether the electronic device 100 is in a pocket to prevent an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is less than another threshold, the electronic device 100 heats the battery 142 to avoid abnormal shutdown of the electronic device 100 caused by low temperature. In some other embodiments, when the temperature is lower than still another threshold, the electronic device 100 boosts an output voltage of the battery 142 to avoid abnormal shutdown caused by low temperature.

The touch sensor 180K is also referred to as a "touch panel". The touch sensor 180K may be disposed on the display 194. The touch sensor 180K and the display 194 form a touchscreen, which is also referred to as a "touch screen". The touch sensor 180K is configured to detect a touch operation on or near the touch sensor. The touch sensor may transfer the detected touch operation to the application processor to determine a type of a touch event. A visual output related to the touch operation may be provided by using the display 194. In some other embodiments, the touch sensor 180K may be alternatively disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may be in contact with a human pulse, to receive a blood pressure pulse signal. In some embodiments, the bone conduction sensor 180M may alternatively be disposed in a headset to be combined into a bone conduction headset. The audio module 170 may obtain a speech signal through parsing based on the vibration signal that is of the vibration bone in the vocal-cord part and that is obtained by the bone conduction sensor 180M, to implement a speech function. The application processor may parse heart rate information based on a blood pressure beating signal obtained by the bone conduction sensor 180M, to implement a heart rate measurement function.

The button 190 includes a power-on button, a volume button, and the like. The button 190 may be a mechanical button, or may be a touch key. The electronic device 100 may receive a button input, and generate a button signal input related to a user setting and function control of the electronic device 100.

The motor 191 may generate a vibration prompt. The motor 191 may be configured to provide a vibration prompt for an incoming call, and may be further configured to provide vibration feedback for a touch. For example, touch operations performed on different applications (for example, photographing and audio playing) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. Customization of a touch vibration feedback effect may further be supported.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195 to implement contact with and separation from the electronic device 100. The electronic device 100 may support 1 or N SIM card interfaces, where N is a positive integer greater than 1. The SIM card interface 195 can support a nano SIM card, a micro SIM card, a SIM card, and the like. A plurality of cards may be inserted into a same SIM card interface 195 at the same time. The plurality of cards may be the same as or different from each other. The SIM card interface 195 may be compatible with different types of SIM cards. The SIM card interface 195 is also compatible with an external storage card. The electronic device 100 interacts with a network through a SIM card, to implement functions such as a call and data communication. In some embodiments, the electronic device 100 uses an eSIM, namely, an embedded SIM card. The eSIM card may be embedded into the electronic device 100, and cannot be separated from the electronic device 100.

In this embodiment of this application, the processor 110 may generate a program instruction with reference to time information, to change display information of the display 194. In addition, the processor 110 may further generate a program instruction with reference to geographic location information obtained by the wireless communication module 160, to change display information of the display. In some embodiments, the memory in the processor 110 may be further configured to store historical operation information of the user on the electronic device 100. The historical operation information may include a browsing amount, an access frequency, an access time, and the like of an application on the electronic device of the user; and may further include information in another dimension. This is not limited in this application. The processor 110 may generate a program instruction after analyzing the foregoing historical operation information, to change display information of the display.

The following describes user interfaces provided in embodiments of this application.

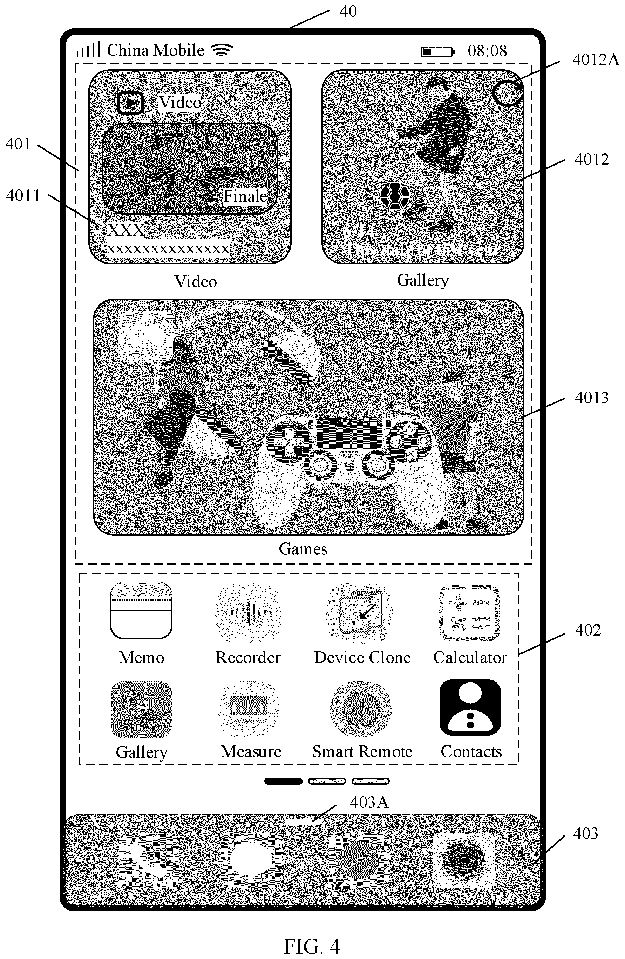

First, a specific interface presentation form of the foregoing scenario-based desktop is described. For details, refer to FIG. 4.

FIG. 4 is a diagram of a scenario-based desktop according to an embodiment of this application. A user interface 40 (the user interface 40 may be referred to as a first desktop in some embodiments of this application) may provide, in a card-and-application icon form, an application or a service card that may be used by a user in a current scenario. As shown in FIG. 4, the user interface 40 may include a card region 401, an application region 402, and a dock region 403.

The card region 401 may include a card 4011, a card 4012, and a card 4013. These cards may display page content of applications corresponding to the cards. For example, the card 4011 is a card generated by an application "Video". The card may be used to display content that the user has recently watched by using the application "Video". The card 4012 is a card generated by an application "Gallery". The card may be used to display an image that is captured by the user and stored in the application "Gallery". The card 4011 is a card generated by an application "Games". The card may be used to display content recommended to the user by using the application "Games". Each card may respond to a user operation, so that the electronic device 100 opens an application corresponding to the card and displays a corresponding application page.

In some embodiments, the card in the card region 401 may further respond to a user operation and implement some functions provided by the application corresponding to the card, when the electronic device 100 does not open the application corresponding to the card. For example, the card 4012 may respond to a tap operation performed on an update control 4012A by the user and update an image displayed in the card 4012. For another example, the card 4012 may share an image in the card 4012 with another person in response to a touch-and-hold operation of the user.

It should be noted that the electronic device 100 may adjust a shape or a size of a corresponding card in response to an operation performed on any card in the card region 401 by the user, for example, a pinch-to-scale operation. Optionally, when the card region 401 includes a plurality of cards, and the user adjusts a shape or a size of one of the cards, the electronic device 100 may simultaneously adjust a size or a shape of another card in the card region 401. In addition, in response to an operation of the user, the electronic device 100 may delete the card in the card region 401, or add, to the card region 401, a card corresponding to another application. Similarly, when a quantity of cards in the card region 401 increases or decreases, the electronic device 100 may correspondingly adjust the size or the shape of the card in the card region 401 to provide the user with a better visual effect. For details, refer to related descriptions in subsequent embodiments. Details are not described herein.

The application region 402 may include, for example, an icon of "Memo", an icon of "Recorder", an icon of "Device Clone", an icon of "Calculator", an icon of "Gallery", an icon of "Measure", an icon of "Smart Remote", and an icon of "Contacts"; and may further include an icon of another application. This is not limited in this embodiment of this application. An icon of any application may be used for responding to a user operation, for example, a touch operation, so that the electronic device starts an application corresponding to the icon.

The dock region 403 may include, for example, an icon of "Phone", an icon of "Messages", an icon of "Browser", and an icon of "Camera". After the user switches an interface displayed on the electronic device 100 from the user interface 40 to another interface, the dock region 403 and the icon of the application included in the dock region may be always displayed in the interface currently displayed on the electronic device 100.

Different from a conventional dock region, a region size of the dock region 403 is adjustable. For example, the dock region 403 may include an adjustment control 403A. The electronic device 100 may increase an area of the dock region 403 in response to an operation performed on the adjustment control 403A by the user, for example, a pull-up operation. Correspondingly, the quantity of applications included in the dock region may also increase. For details, refer to related descriptions in subsequent embodiments. Details are not described herein.

In addition, in this application, the electronic device 100 may automatically update the card in the card region 401 and the icon in the application region 402 based on a time change, a location change, a relationship between a previous event and a current event, and a user habit. It should be understood that the update herein is not limited to a change of a shape and content of a card, and may further include an update of a card corresponding to a specific application in the card region 401 to a card corresponding to another application. For details, refer to related descriptions in subsequent embodiments.

It may be understood that sizes of and a location relationship among the card region 401, the application region 402, and the dock region 403 in the user interface 40 may be alternatively expressed in another form. The user interface 40 merely shows an example of the scenario-based desktop provided in this embodiment of this application. This should not constitute a limitation on this embodiment of this application.

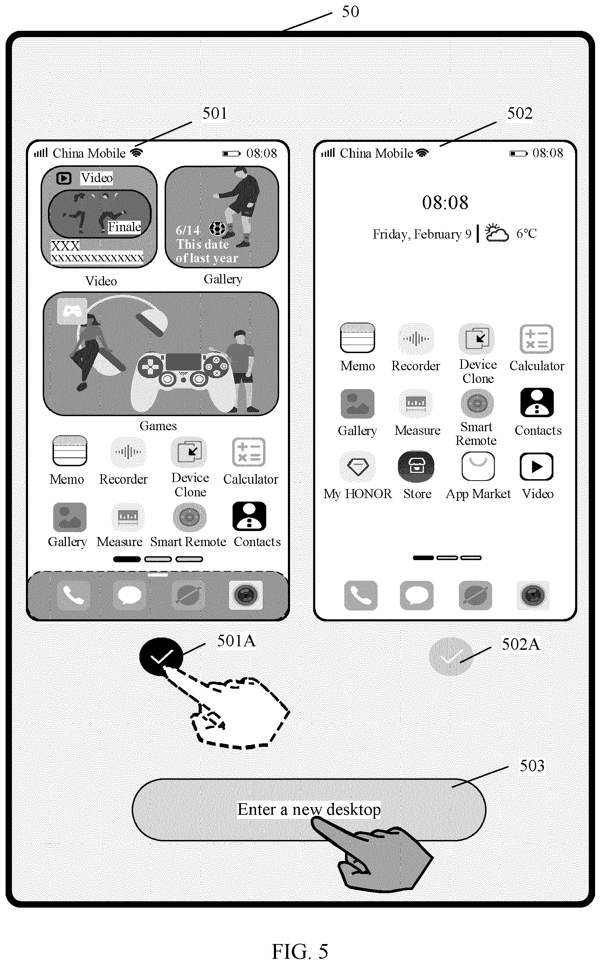

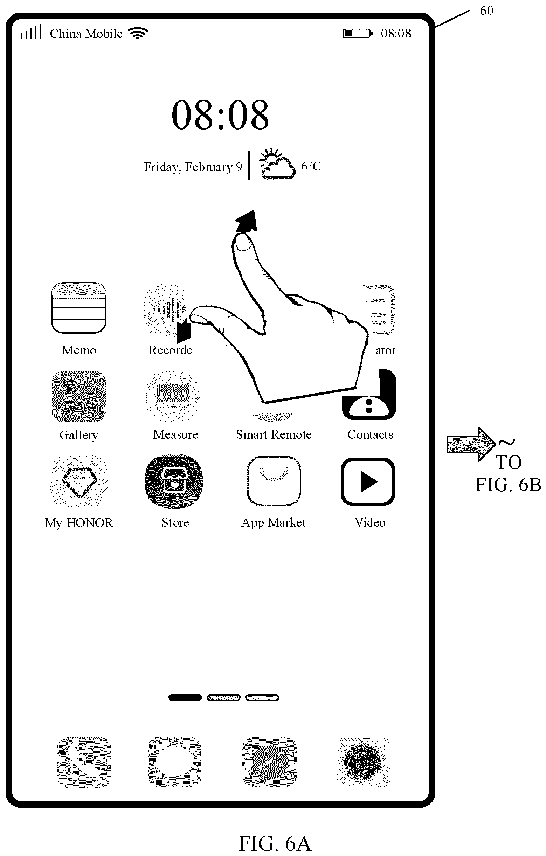

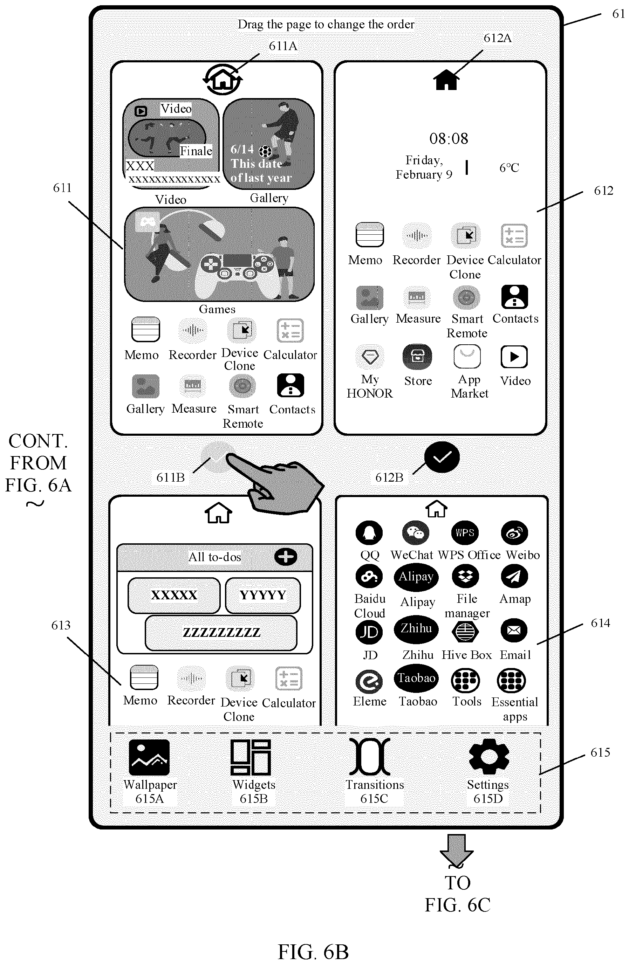

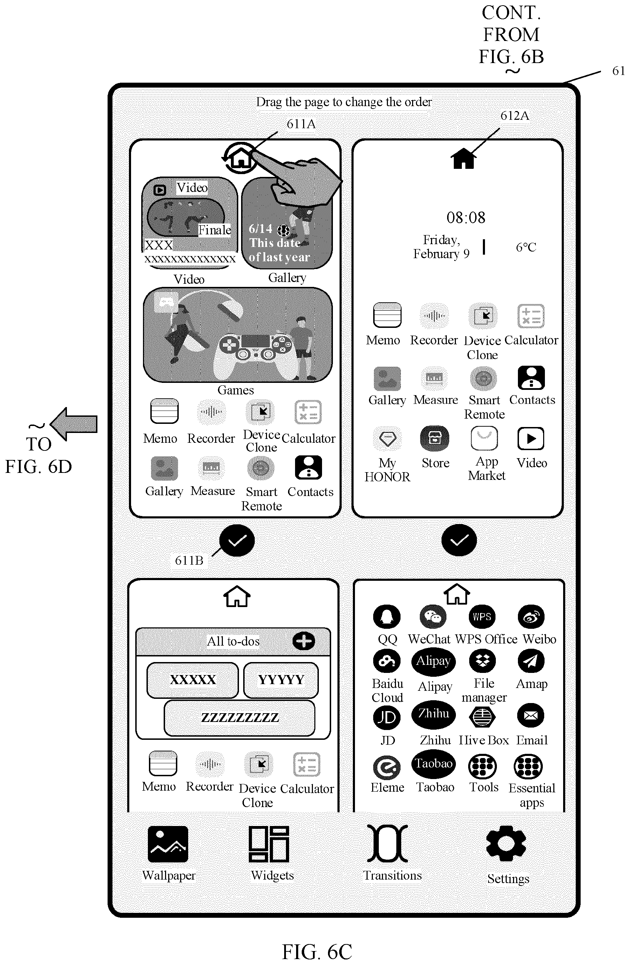

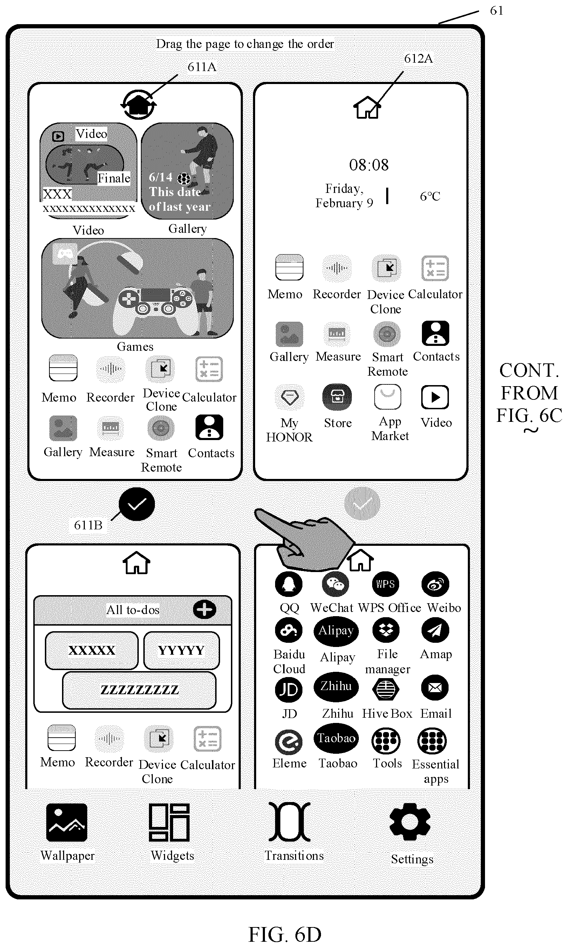

The following describes user interfaces used when the electronic device 100 enables a scenario-based desktop and sets the scenario-based desktop as a home screen. Refer to FIG. 5, FIG. 6A, FIG. 6B, FIG. 6C, and FIG. 6D.

FIG. 5 shows a process in which the electronic device 100 sets a desktop as a scenario-based desktop (for example, the user interface 40 in the foregoing descriptions) provided in this application in response to a user operation when the user uses, for a first time, the electronic device 100 after delivery.

As shown in FIG. 5, a user interface 50 may be an interface displayed on the electronic device 100 after the user turns on the electronic device 100 after delivery of the electronic device 100. The user interface 50 may include an interface thumbnail 501, an interface thumbnail 502, and an "Enter a new desktop" control 503. The interface thumbnail 501 is a thumbnail of a scenario-based desktop provided in this application. The interface thumbnail 502 is a thumbnail of a common desktop. Selection controls, that is, a selection control 501A and a selection control 502A, are respectively set in lower parts of the two thumbnails. Either selection control may respond to a tap operation of the user, so that the electronic device 100 sets a desktop displayed on a corresponding interface thumbnails as a home screen of the electronic device 100. For example, the electronic device 100 may respond to a tap operation performed by the user on the selection control 501A in FIG. 5. After the interface thumbnail 501 is selected, in response to a tap operation performed by the user on the "Enter a new desktop" control 503, the electronic device 100 may display a scenario-based desktop (for example, the user interface 40 in the foregoing descriptions) corresponding to the interface thumbnail 501.

FIG. 6A, FIG. 6B, FIG. 6C, and FIG. 6D show a process in which the electronic device 100 sets a home screen from a common desktop to a scenario-based desktop (for example, the user interface 40 in the foregoing descriptions) provided in this application in response to a user operation.

As shown in FIG. 6A, a user interface 60 shown in FIG. 6A is a home screen of the electronic device 100. With reference to related descriptions of FIG. 1A, FIG. 1B, FIG. 2A, and FIG. 2B, it may be learned that the user interface 60 is a conventional common desktop. For specific functions of content included in the user interface 60, refer to the foregoing related descriptions of the home screen 10 or the home screen 20. Details are not described herein again.

As shown in FIG. 6A, the electronic device 100 may display a user interface 61 shown in FIG. 6B in response to an operation performed by the user on the user interface 60, for example, a pinch-to-scale operation shown in FIG. 6A. As shown in FIG. 6B, the user interface 61 may include an interface thumbnail 611, an interface thumbnail 612, an interface thumbnail 613, an interface thumbnail 614, and a function option region 615.

The interface thumbnail 611 is a thumbnail of a scenario-based desktop provided in this application. The interface thumbnails 612 to 614 are thumbnails of common desktops. The interface thumbnails 613 and 614 cannot be fully displayed due to an area limitation of a screen of the electronic device 100. The user may perform a pull-down operation, so that the interface thumbnails 613 and 614 are fully displayed on the screen.

The function option region 615 may include a Wallpaper option 615A, a Widgets option 615B, a Transitions option 615C, and a Settings option 615D. The Wallpaper option 615A may be used to set a desktop wallpaper of the electronic device 100. The Widgets option 615B may be used to add a card corresponding to an application to a desktop of the electronic device 100. The Transitions option 615C may be used to set a switching effect between interfaces when a quantity of interfaces in an interface list of the electronic device 100 is greater than 1, for example, Flip over switching and Rotate switching. The Settings option 615D may be used to set parameters such as an icon size of an application on the desktop of the electronic device 100 and a desktop layout.

In the user interface 60, there is a selection control in a lower part of each interface thumbnail, for example, a selection control 611B in a lower part of the interface thumbnail 611 and a selection control 612B in a lower part of the interface thumbnail 612. When a specific selection control is selected (that is, the selection control is in a dark state, for example, the selection control 611B), it indicates that an interface displayed in an interface thumbnail corresponding to the selection control is to be added to the interface list of the electronic device 100. In addition, any selection control may respond to a tap operation of the user, so that the electronic device 100 adds a user interface displayed in an interface thumbnail corresponding to the selection control to the interface list of the electronic device 100 or removes the user interface from the interface list of the electronic device 100. For example, the electronic device 100 may add a scenario-based interface displayed in the interface thumbnail 611A to the interface list of the electronic device 100 in response to a tap operation performed by the user on the selection control 611B. In addition, in the user interface 61, an upper region in each interface thumbnail may include a home screen control, for example, a home screen control 611A in the interface thumbnail 611 and a home screen control 612A in the interface thumbnail 612. When a specific home screen control is selected (that is, the home screen control is in a dark state, for example, the selection control 612A), it indicates that an interface displayed in an interface thumbnail corresponding to the home screen control is to be set as a home screen of the electronic device 100. A home screen control in any interface thumbnail may respond to a tap operation of the user, so that the electronic device 100 sets an interface corresponding to the interface thumbnail as the home screen of the electronic device 100. It should be noted that, in the user interface 60, a specific pattern (that is, an appearance) of the home screen control 611A may be different from the home screen control 612A and a home screen control in another interface thumbnail, to prompt the user that the interface thumbnail corresponding to the home screen control 611A is a thumbnail of a scenario-based desktop. It should be understood that the electronic device 100 may further distinguish between the thumbnail of the scenario-based desktop and a thumbnail of a common desktop in another manner. This is not limited in this application.

As shown in FIG. 6C, in response to a tap operation performed by the user on the home screen control 611A, the electronic device 100 may set, as the home screen of the electronic device 100, the scenario-based interface displayed in the interface thumbnail 611A. In this case, as shown in FIG. 6D, the home screen control 611A is in a selected state, and the home screen control 612A is updated to an unselected state from the historical selected state. In other words, the interface displayed in the interface thumbnail 612 is no longer set as the home screen of the electronic device 100. Finally, in response to a user operation, for example, a tap operation performed by the user on a blank region in the interface 61 shown in FIG. 6D, the electronic device 100 may set, as the home screen of the electronic device 100, the scenario-based desktop (for example, the user interface 40 in the foregoing descriptions) corresponding to the interface thumbnail 501.

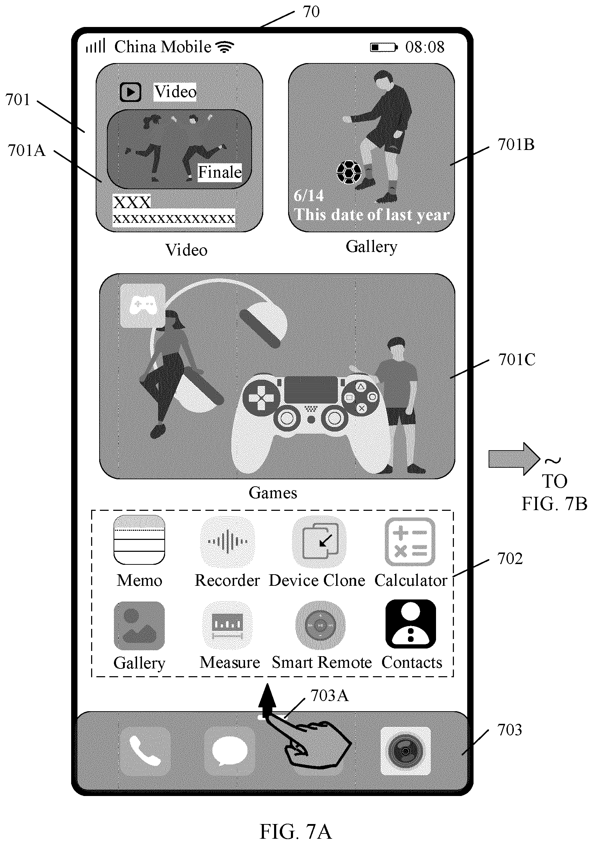

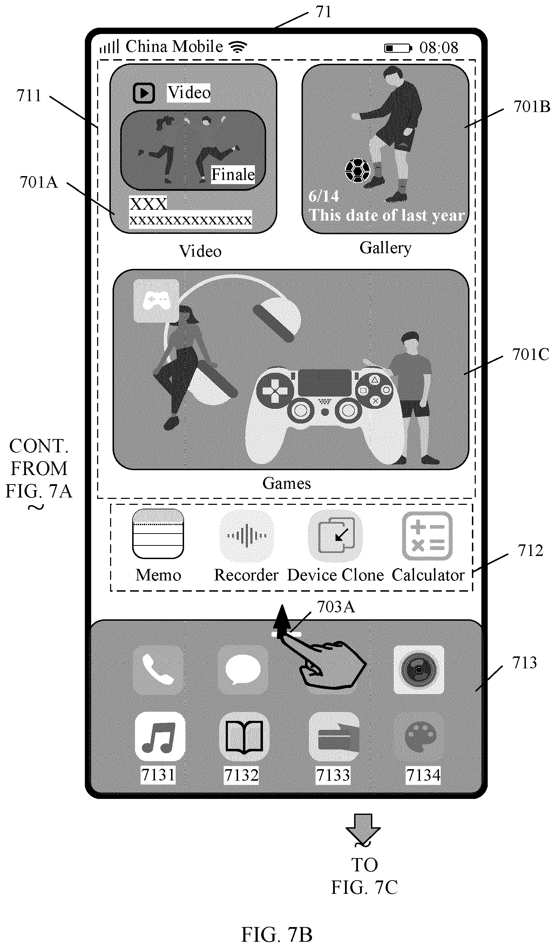

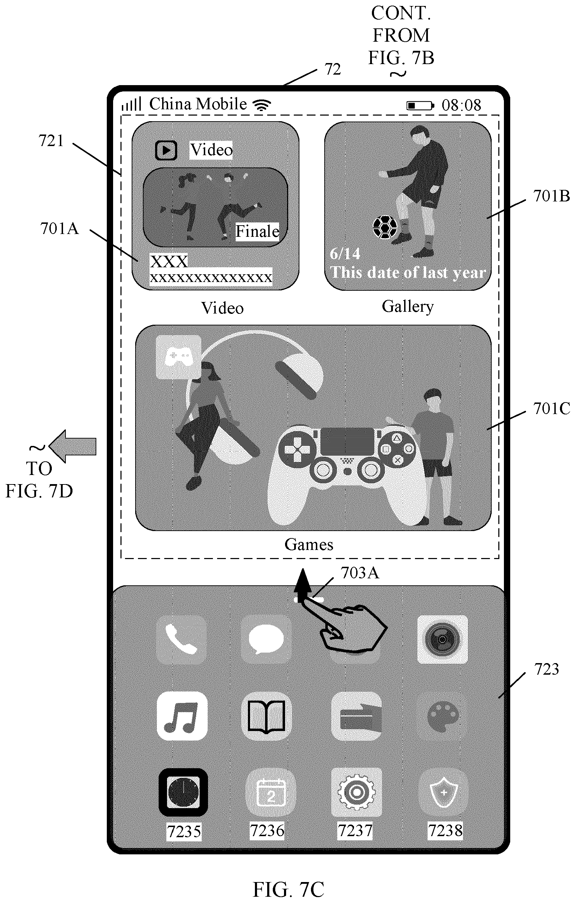

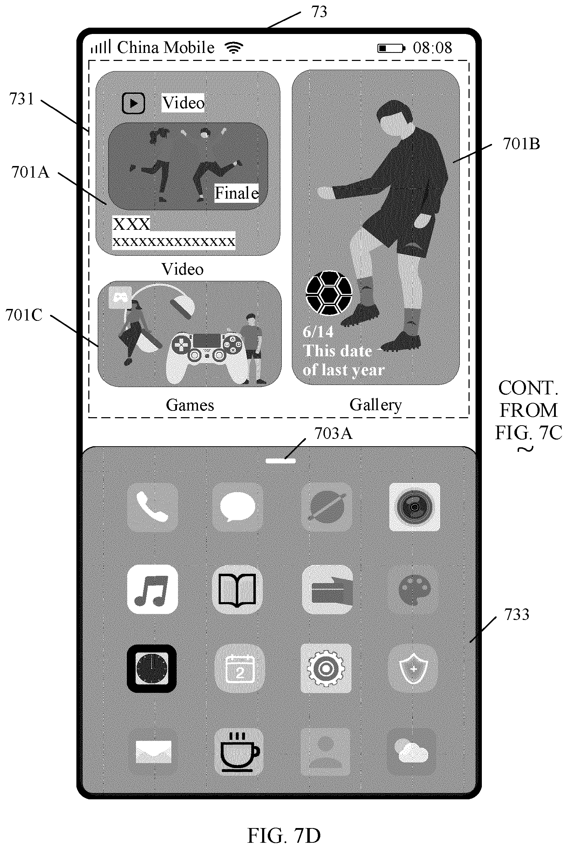

It may be learned from the foregoing descriptions that a size of a dock region is adjustable on the scenario-based desktop provided in this application. Correspondingly, a quantity of application icons included in the dock region may also increase with enlargement of the dock region. User interfaces shown in FIG. 7A, FIG. 7B, FIG. 7C, and FIG. 7D show a process in which the electronic device 100 adjusts a size of a dock region in response to a user operation, and adaptively adjusts a shape of a card in an interface as the size of the dock region changes.

As shown in FIG. 7A, a user interface 70 (the user interface 70 may be referred to as a first desktop in some embodiments of this application) is an expression form of a scenario-based desktop provided in an embodiment of this application. The user interface 70 may include a card region 701, an application region 702, and a dock region 703 (the dock region 703 may be referred to as a first dock region in some embodiments of this application). For specific content included in each region and functions of each region, refer to the related descriptions of the user interface 40 in FIG. 4. Details are not described herein again.

The dock region 703 may include an adjustment control 703A. In response to an operation performed by the user on the adjustment control 703A, for example, a pull-up operation shown in FIG. 7A (the pull-up operation may be referred to as a first operation in some embodiments of this application), the electronic device 100 may increase an area of the dock region 703. A quantity of application icons included in the dock region 703 may also increase accordingly, and a type of an application icon added to the dock region 703 may be set before delivery of the electronic device 100. In a user interface 71 shown in FIG. 7B (the user interface 71 may be referred to as a third desktop in some embodiments of this application), an area of a dock region 713 shown in FIG. 7B (the dock region 713 may be referred to as a second dock region in some embodiments of this application) is larger than that of the dock region 703 shown in FIG. 7A. After the dock region 713 is enlarged, an icon 7131 of "Music", an icon 7132 of "E-book", an icon 7133 of "Email", and an icon 7134 of "Theme" are newly added into the dock region 713.

When the user performs another pull-up operation shown in FIG. 7B on the adjustment control 703A, an area of the dock region 713 continuously increases, and a quantity of application icons included in the dock region 713 also continuously increases. As shown in FIG. 7C, an area of a dock region 723 shown in FIG. 7C is larger than that of the dock region 713 shown in FIG. 7B. After the dock region 713 is enlarged to obtain the dock region 723, an icon 7235 of "Clock", an icon 7236 of "Calendar", an icon 7237 of "Settings", and an icon 7238 of "Security" are further added into the dock region 723.

It should be noted that, on a scenario-based desktop provided in this application, when an area of a dock region changes, areas of a card region and an application region on the scenario-based desktop also change accordingly. Therefore, in an optional implementation, when an area of the dock region 723 changes, the electronic device 100 may adaptively change a quantity of cards and a shape of a card in the card region on the scenario-based desktop, or may adaptively add or delete an application icon in the application region.

For example, the area of the dock region 713 shown in FIG. 7B is larger than that of the dock region 703 shown in FIG. 7A. This also means that an area of the application region 712 shown in FIG. 7B is smaller than that of the application region 702 shown in FIG. 7A. Therefore, after the electronic device 100 adjusts the dock region 703 shown in FIG. 7A to obtain the dock region 713 shown in FIG. 7B, the electronic device 100 may no longer display an icon of "Gallery", an icon of "Measure", an icon of "Smart Remote", and an icon of "Contacts" in the application region. Specifically, after the electronic device 100 adjusts the dock region 703 shown in FIG. 7A to obtain the dock region 713 shown in FIG. 7B, the electronic device 100 may delete the icon of "Gallery", the icon of "Measure", the icon of "Smart Remote", and the icon of "Contacts" in the dock region 702. Alternatively, the electronic device 100 may not delete the icon of "Gallery", the icon of "Measure", the icon of "Smart Remote", and the icon of "Contacts" in the dock region 702, but hide these icons under the dock region 713. In other words, the icon of "Gallery", the icon of "Measure", the icon of "Smart Remote", and the icon of "Contacts" are covered by the dock region 713. This is not limited in this application.

In the user interface 71 shown in FIG. 7B and the user interface 72 shown in FIG. 7C, the area of the dock region 703 or the dock region 701 does not affect the area of the card region. Therefore, in comparison with the card region 701 shown in FIG. 7A, card display manners of the card region 711 shown in FIG. 7B and the card region 721 shown in FIG. 7C remain unchanged. However, when the user continues to perform the pull-up operation shown in FIG. 7C on the adjustment control 703A, after the area of the dock region 723 increases to a specific threshold, the area of the dock region affects the area of the card region. In this case, the electronic device 100 may adaptively change parameters such as a quantity of cards, a shape of a card, and a position of a card in the card region on the scenario-based desktop. In a user interface 73 shown in FIG. 7D, when the dock region 723 on the scenario-based desktop increases to obtain a dock region 733 shown in FIG. 7D, an area of a card region 731 shown in FIG. 7D is smaller than that of the card regions 701, 711, and 721 shown in FIG. 7A, FIG. 7B, and FIG. 7C. In this case, the electronic device 100 may adjust a size, a shape, and a position of each card in the card region 721 to a pattern shown in FIG. 7D.

It may be understood that FIG. 7A, FIG. 7B, FIG. 7C, and FIG. 7D merely show an example of a process in which the electronic device 100 adjusts each region of the scenario-based interface. The process in which the electronic device 100 adjusts each region of the scenario-based interface may be alternatively presented in another form. This should not constitute a limitation on this embodiment of this application.

In addition, the user can delete and add a card in the card region and adjust a shape and a size of the card. Correspondingly, after the user deletes a specific card in the card region, adds a card corresponding to another application to the card region, or adjusts a shape and a size of a specific card, to ensure browsing experience of the user, the electronic device 100 may also adaptively adjust a shape and a size of another card in the card region and a specific position of the another card in the card region.

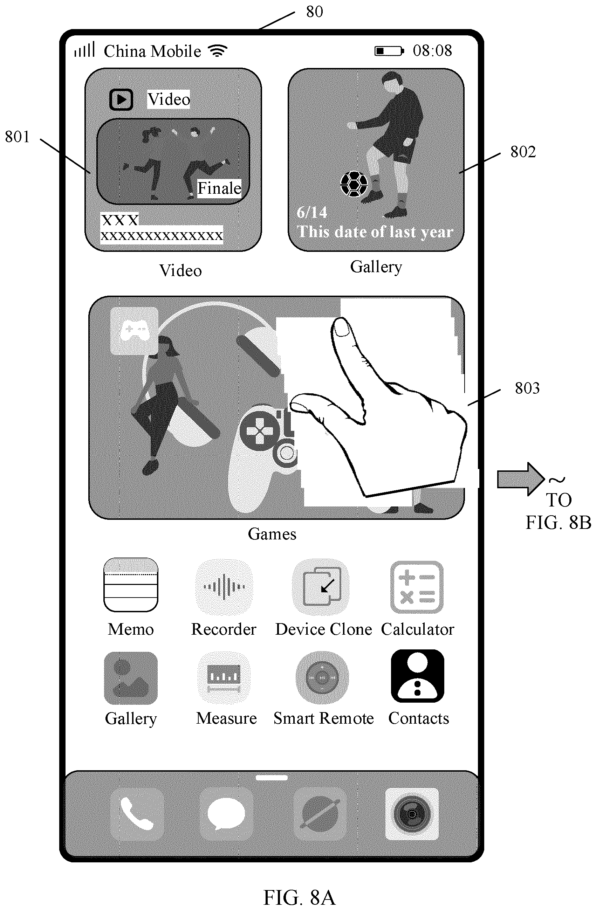

FIG. 8A to FIG. 10B show examples of specific processes in which the electronic device 100 adaptively adjusts a shape and a size of a card in a card region and a specific position of the card in the card region after the user adjusts a shape and a size of another specific card, deletes another specific card in the card region, and adds another card to the card region.

As shown in FIG. 8A, a card region in a user interface 80 includes a card 801, a card 802, and a card 803. The electronic device may scale down the card 803 in response to an operation performed by the user on the card 803 (the card 803 may be referred to as an eighth card in some embodiments of this application), for example, a pinch-to-scale operation shown in FIG. 8A (the pinch-to-scale operation may be referred to as a fourth operation in some embodiments of this application).

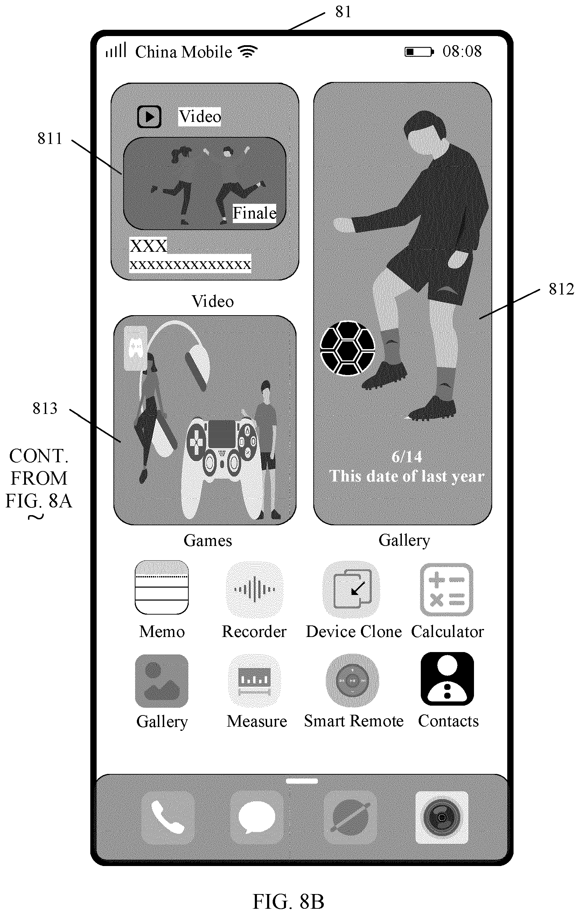

For the user interface 80 obtained after the card 803 is scaled down, refer to FIG. 8B. In a user interface 81 shown in FIG. 8B (the user interface 81 may be referred to as a sixth desktop in some embodiments of this application), a card 813 is a card obtained after the card 803 is scaled down. Because the card 803 is scaled down, the electronic device 100 adaptively scales up the card 802 to obtain a card 812 shown in FIG. 8B. Shapes of the card 802 and the card 803 and positions of the two cards in the card region also change accordingly.

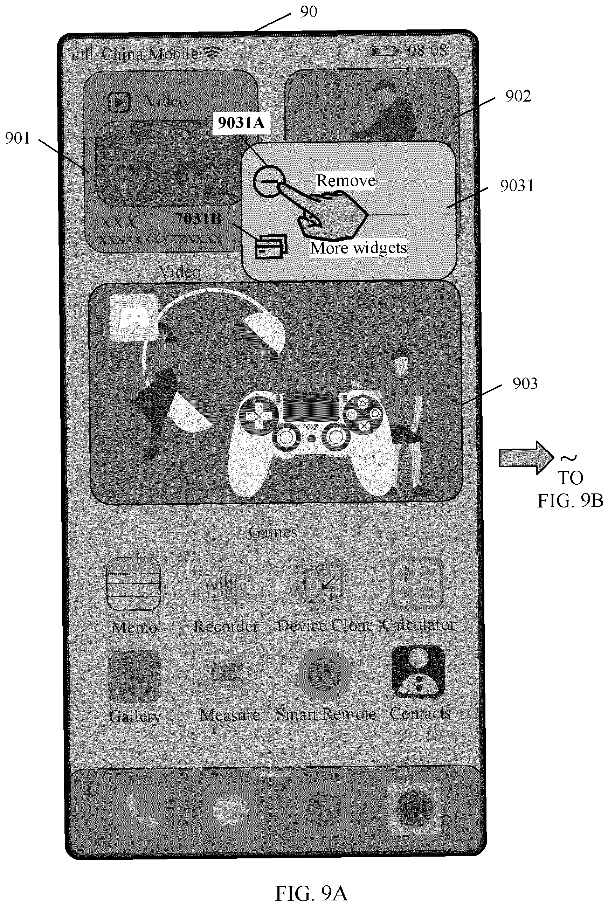

In addition, the electronic device 100 may display a user interface 90 shown in FIG. 9A in response to a touch-and-hold operation performed by the user on the card 4013 (the card 4013 may be referred to as a fourth card in some embodiments of this application) included in the interface 40 shown in FIG. 4. As shown in FIG. 9A, the user interface 90 may include a card 901, a card 902, a card 903, and a control card 9031.

The card 901 corresponds to the card 4011 in the user interface 40. The card 902 corresponds to the card 4012 in the user interface 40. The card 903 corresponds to the card 4013 in the user interface 40.

The control card 9031 may include a Remove control 9031A.

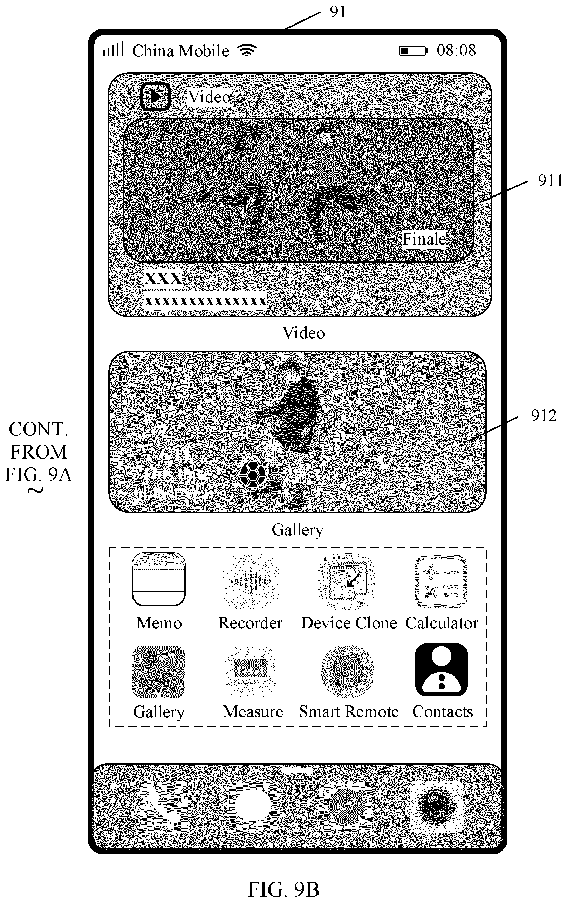

In response to an operation performed by the user on the Remove control 9031A, for example, a tap operation shown in FIG. 9A (the touch-and-hold operation performed on the card 4013 and the tap operation shown in FIG. 9A together may be referred to as a second operation in some embodiments of this application), the electronic device 100 may delete the card 903 from a dock region in the user interface 90, and display a user interface 91 shown in FIG. 9B (the user interface 91 may be referred to as a fourth desktop in some embodiments of this application). As shown in FIG. 9B, the user interface 91 may include a card 911 and a card 912 (the cards 911 and 912 may be referred to as at least one fifth card in some embodiments of this application).

The card 911 corresponds to the card 901 in the user interface 90. The card 912 corresponds to the card 902 in the user interface 40.

Because the card 903 is deleted, the electronic device 100 adaptively scales up the card 901 and the card 902, and correspondingly adjusts shapes of the card 802 and the card 803 and positions of the two cards in a card region.

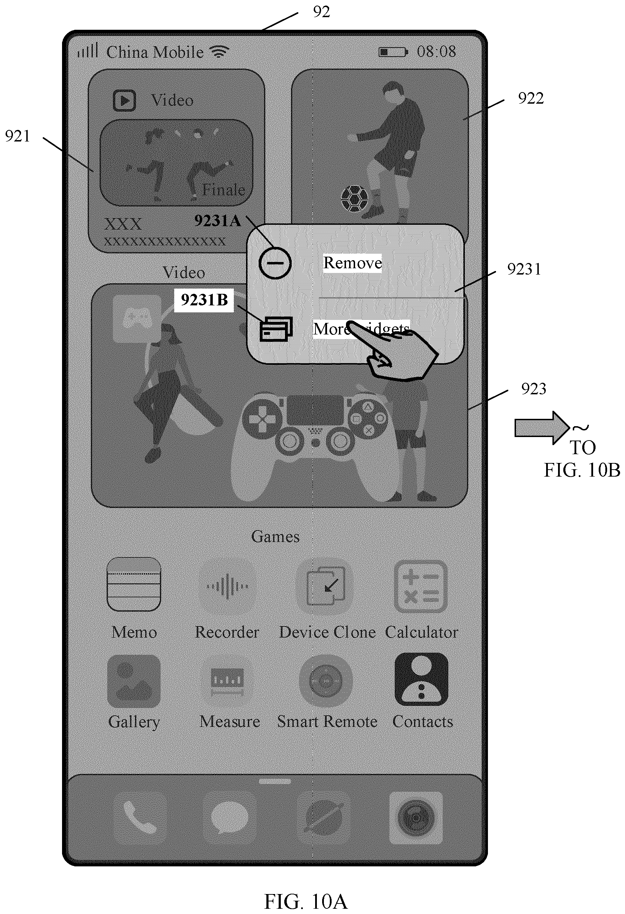

In addition, the electronic device 100 may further display a user interface 92 shown in FIG. 10A in response to a touch-and-hold operation performed by the user on the interface 40 shown in FIG. 4. As shown in FIG. 10A, the user interface 92 may include a card 921, a card 922, a card 923, and a control card 9231.

The card 921 corresponds to the card 4011 in the user interface 40. The card 922 corresponds to the card 4012 in the user interface 40. The card 923 corresponds to the card 4013 in the user interface 40.

The control card 9231 may include a More widgets control 9231B.

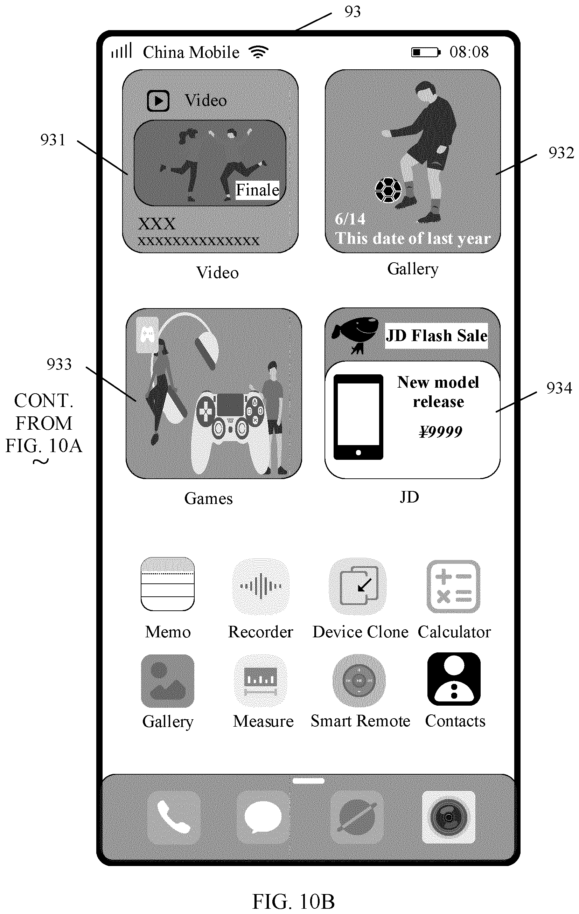

In response to an operation performed by the user on the More widgets control 9231B, for example, a tap operation shown in FIG. 10A (the foregoing touch-and-hold operation performed on the card 4013 and the tap operation shown in FIG. 10A together may be referred to as a third operation in some embodiments of this application), the electronic device 100 may add another card to a card region, and display a user interface 93 shown in FIG. 10B (the user interface 93 may be referred to as a fifth desktop in some embodiments of this application). As shown in FIG. 10B, the user interface 93 may include a card 931, a card 932, a card 933, and a card 934 (the card 934 may be referred to as a sixth card in some embodiments of this application).

The card 931 corresponds to the card 921 in the user interface 92. The card 932 corresponds to the card 922 in the user interface 40. The card 933 corresponds to the card 932 in the user interface 40. The card 934 is a card newly added to the card region by the electronic device. The card 934 is a card generated by an application "JD" (the cards 921 to 934 may be referred to as at least one seventh card in some embodiments of this application).

Because the card 934 is newly added to the card region, the electronic device 100 adaptively scales down the card 923, and adjusts a shape of the card 923 and a position of the card 923 in the card region accordingly.

It may be understood that FIG. 8A to FIG. 10B merely show the examples of the processes in which the electronic device 100 adjusts a card in a scenario-based interface. The electronic device 100 may adjust a card in a scenario-based interface in another case or in another form. This is not limited in this application. For example, after a card is deleted, the electronic device 100 may not scale up all remaining cards, but scale up some of the remaining cards or even scale down some of the remaining cards. Examples are not described one by one herein.

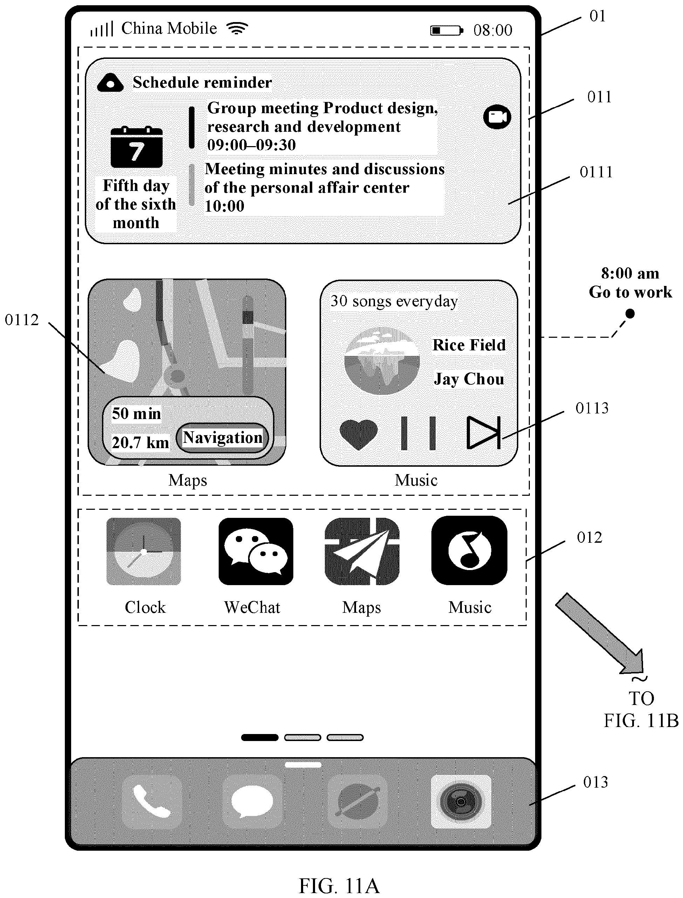

It may be learned from the foregoing descriptions that, in this application, the electronic device 100 may automatically update content of a scenario-based desktop based on parameters such as a time change, a location change, a relationship between a previous event and a current event, and a user habit. In addition, the electronic device 100 may automatically update the content of the scenario-based desktop based on a change of another parameter. This is not limited in this application. The content may include a card in the card region and an icon in the application region. With reference to FIG. 11A to FIG. 13C, the following describes embodiments in which the electronic device 100 updates content of a scenario-based desktop.
I. The electronic device 100 updates the content of the scenario-based desktop according to a time.

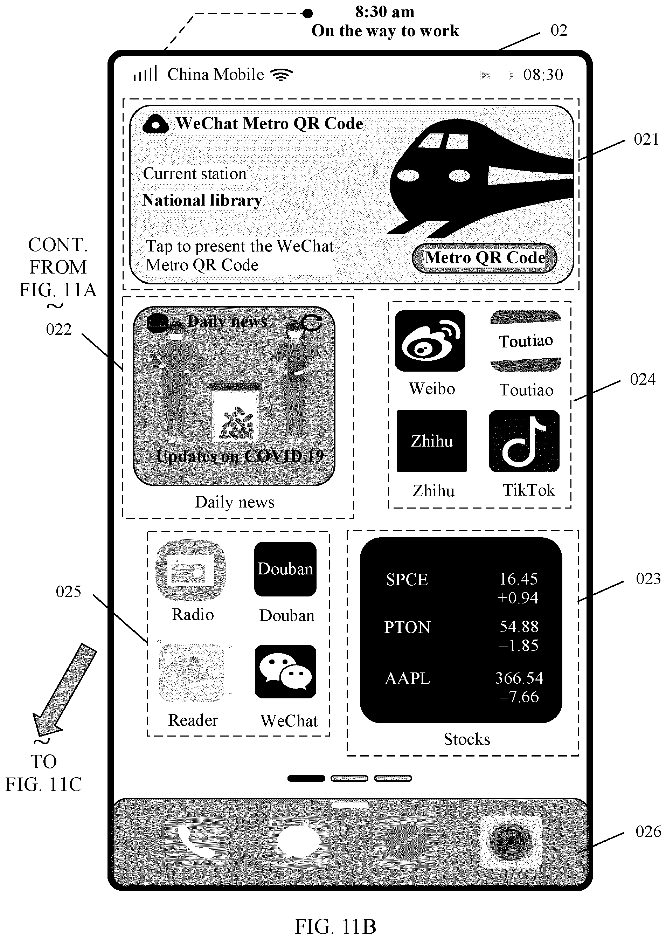

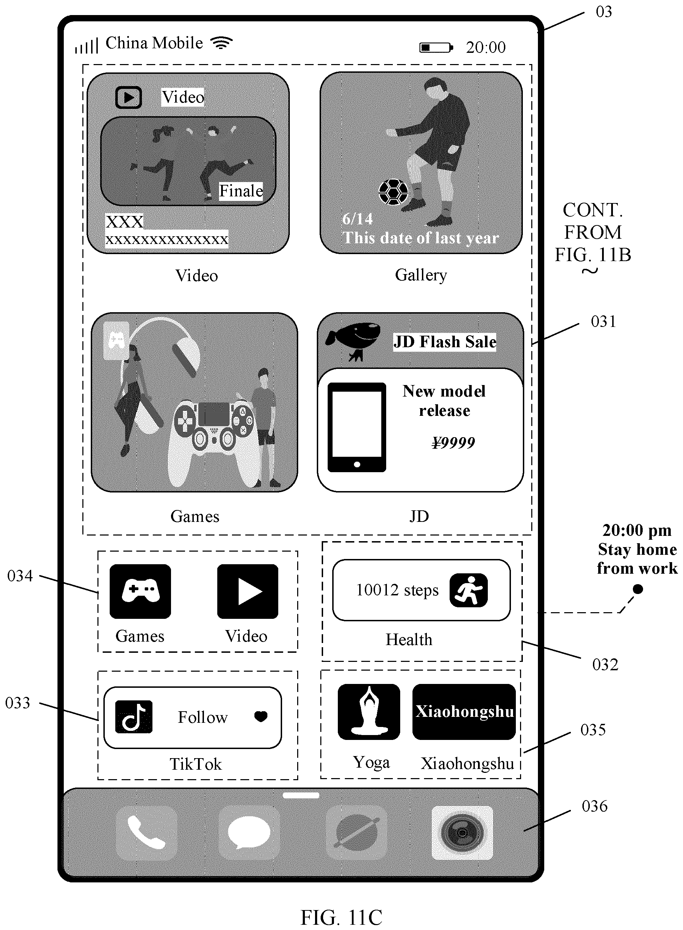

It may be understood that a schedule of the user is very likely to be regular in a common day. For example, most people get up at 7:00 am, need to leave the home and go to the company by taking a car or by driving a car in 8:00 am to 9:00 am, and get home from work after 6:00 pm. Therefore, in this embodiment of this application, the electronic device 100 may update the content of the scenario-based desktop at different times with reference to a user habit, so that the user can more quickly find an application that needs to be opened at a current time. For details, refer to FIG. 11.

As shown in FIG. 11A, a user interface 01 (the user interface 01 may be referred to as a first desktop in some embodiments of this application) is a scenario-based desktop provided in an embodiment of this application, and content included in the scenario-based desktop is recommended by the electronic device 100 to the user according to a user habit when the user goes to work at 8:00 am. The user interface 01 includes a card region 011, an application region 012, and a dock region 013.

The card region 011 may include a card 0111, a card 0112, and a card 0113 (the cards 0111 to 0113 may be referred to as at least one first card in some embodiments of this application). The card 0111 is a schedule reminding card that is generated by an application "Calendar" and that is used to display schedule information preset by the user. The card 0112 is a route navigation card that is generated by an application "Maps" and that is used to display information such as a route and a duration that are planned for the user to get to a destination. The card 0113 is a player card that is generated by an application "Music" and that is used to display information about a currently played song for the user and provide the user with functions of switching a song, playing a song, and suspending song playing. Each card may respond to a user operation, so that the electronic device 100 opens an application corresponding to the card and displays a corresponding application page.

The application region 012 may include an icon of "Clock", an icon of "WeChat^{®}", an icon of "Maps", and an icon of "Music". An icon of any application may be used for responding to a user operation, for example, a touch operation, so that the electronic device 100 starts an application corresponding to the icon.

The dock region 013 may include, for example, an icon of "Phone", an icon of "Messages", an icon of "Browser", and an icon of "Camera"; and may further include an icon of another application. This is not limited in this embodiment of this application (all applications in the application region 012 and the dock region 013 may be referred to as at least one first application in some embodiments of this application).

An icon of any application may be used for responding to a user operation, for example, a touch operation, so that the electronic device 100 starts an application corresponding to the icon. The dock region 013 may include an adjustment control. The electronic device 100 may increase an area of the dock region 013 in response to an operation performed by the user on the adjustment control. A quantity of application icons included in the dock region 013 may also increase accordingly, and a type of an application icon added to the dock region 013 may be set before delivery of the electronic device 100. For details, refer to the related descriptions of FIG. 7A, FIG. 7B, FIG. 7C, and FIG. 7D in the foregoing embodiment. In addition, for dock regions shown in the following embodiments, refer to the related descriptions of FIG. 7A, FIG. 7B, FIG. 7C, and FIG. 7D in the foregoing embodiment.

It may be understood that the user usually goes to work around 8:00 am. In this case, the user may need to go to a working place by taking a car or by driving a car. Before arriving at the working place, the user may also need to check a schedule that needs to be processed in this day. In addition, the user may want to listen to music or communicate with other people by using social software in a process of getting on a car or going to a station. Therefore, when the user goes to work at 8:00 am, the electronic device 100 may display the user interface 01 for the user, to meet a requirement of the user in this case.

When time comes to 8:30 am, the user may be on a commute to work. In this case, the electronic device 100 may update content displayed in the card region and the application region in the scenario-based desktop. In other words, the electronic device 100 may update the scenario-based desktop from the user interface 01 shown in FIG. 11A to the user interface 02 shown in FIG. 11B (the user interface 02 may be referred to as a second desktop in some embodiments of this application). As shown in FIG. 11B, the user interface 02 may include card regions 021 to 023, application regions 024 and 025, and a dock region 026.

The card regions 021 to 023 (all cards in the cards 021 to 023 may be referred to as at least one second card in some embodiments of this application) may be collectively referred to as a card region of the user interface 02. The application regions 024 and 025 may be collectively referred to as an application region of the user interface 02. In other words, in this application, a card region or an application region of a scenario-based desktop may be divided into a plurality of regions. A plurality of card regions in a same interface may be not displayed in a connected state, and a plurality of application regions in a same interface may also be not displayed in a connected state. Instead, the plurality of card regions or the plurality of application regions may be displayed in a state of interleaved arrangement shown in the user interface 02.

The card region 021 may include a passenger QR code card that is generated by an application "WeChat" and that is used to display information about a metro station near a location of the user and provide the user with a function of quickly opening a metro passenger QR code. The card region 022 may include a news card that is generated by an application "Daily News" and that is used to display latest news of this day. The card region 023 can include a stock market card that is generated by an application "Stocks" and that is used to display a stock market trend of this day for the user. Each card may respond to a user operation, so that the electronic device 100 opens an application corresponding to the card and displays a corresponding application page.

The application region 024 may include an icon of "Weibo^{®}", an icon of "Douban^{®}", an icon of "Reader", and an icon of TikTok. The application region 025 may include an icon of "Radio", an icon of "Toutiao^{®}", an icon of "Zhihu^{®}", and an icon of "WeChat". An icon of any application may be used for responding to a user operation, for example, a touch operation, so that the electronic device 100 starts an application corresponding to the icon.

The dock region 026 may include, for example, an icon of "Phone", an icon of "Messages", an icon of "Browser", and an icon of "Camera"; and may further include an icon of another application. This is not limited in this embodiment of this application (all applications in the application regions 024 and 025 and the dock region 026 may be referred to as at least one second application in some embodiments of this application). An icon of any application may be used for responding to a user operation, for example, a touch operation, so that the electronic device 100 starts the application corresponding to the icon. For details, refer to the foregoing related descriptions of the dock region 013.

It can be understood that the user is usually on a way to work around 8:30 am. In this case, the user may need to take the metro or bus. On the metro and the bus, the user may browse or listen to news and stock information of this day, or open entertainment software such as TikTok, Douban, or Reader to watch a video or read an article. Therefore, when the user is on the commute to work at 8:30 am, the electronic device 100 may display the user interface 02 for the user, to meet a requirement of the user at this time.

At 20:00 pm, the user stays home from work. In this case, the electronic device 100 may update the content displayed in the card region and the application region in the scenario-based desktop again. To be specific, the electronic device 100 may update the scenario-based desktop from the user interface 01 shown in FIG. 11B to the user interface 03 shown in FIG. 11C. As shown in FIG. 11C, the user interface 02 may include card regions 031 to 033, application regions 035 and 036, and a dock region 036.

The card regions 021 to 023 may be collectively referred to as a card region of the user interface 02. The application regions 023 and 024 may be collectively referred to as an application region of the user interface 02. In other words, in this application, a card region or an application region of a scenario-based desktop may be divided into a plurality of regions. A plurality of card regions in a same interface may be not displayed in a connected state, and a plurality of application regions in a same interface may also be not displayed in a connected state. Instead, the plurality of card regions or the plurality of application regions may be displayed in a state of interleaved arrangement shown in the user interface 02.

The card region 031 may include a card that is generated by an application "Video" and that is used to recommend, to the user, a current hot TV series or a TV series recently watched by the user, a card that is generated by an application "Gallery" and that is used to display, for the user, a historical photo captured by the user, a card that is generated by an application "Games" and that is used to recommend a current hot game to the user, and a card that is generated by an application "JD^{®}" and that is used to recommend a hot product or a bargain to the user. The card region 032 may include a card that is generated by an application "Health" and that is used to display an amount of exercise of the user in this day. The card region 033 may include a card that is generated by an application "TikTok^{®}" and that is used to recommend a video that the user may like or display prompt information for the user, for example, an account followed by the user has a content update. Each card may respond to a user operation, so that the electronic device 100 opens an application corresponding to the card and displays a corresponding application page.

The application region 034 may include an icon of "Games" and an icon of "Video". The application region 035 may include an icon of "Yoga" and an icon of "Xiaohongshu". An icon of any application may be used for responding to a user operation, for example, a touch operation, so that the electronic device 100 starts an application corresponding to the icon.

The dock region 036 may include, for example, an icon of "Phone", an icon of "Messages", an icon of "Browser", and an icon of "Camera"; and may further include an icon of another application. This is not limited in this embodiment of this application. An icon of any application may be used for responding to a user operation, for example, a touch operation, so that the electronic device 100 starts the application corresponding to the icon. For details, refer to the foregoing related descriptions of the dock region 013.

It may be understood that when the user ends work and returns home, the user may be accustomed to performing a series of entertainment activities in this time period. For example, the user may play games, perform online shopping, watch TV series, do yoga, run, or the like in this time period. Therefore, when the user arrives at home at 20:00 pm, the electronic device 100 may display a user interface 03 for the user, to meet a requirement of the user at this time.

It should be noted that this embodiment of this application merely shows an example of a process in which the electronic device 100 adjusts content of the scenario-based desktop according to a time. This should not constitute a limitation on this application. For example, the electronic device 100 may further update the content of the scenario-based desktop at another moment of the day. For example, at 12:00 noon, the electronic device 100 may update the content of the scenario-based desktop, and display, for the user, a card generated by an application "Meituan". For another example, in a non-work day, the user does not need to get up early to work, and content included in the scenario-based desktop displayed on the electronic device 100 at 8:00 am may be different from the content included in the user interface 01. In addition, personal habits of different users may be different, and a personal habit of a same user may also change. Therefore, in a process in which the user daily uses the electronic device, the electronic device 100 may record event tracking data in real time. The event tracking data may include an application that is recently usually used by the user and a time at which the application is opened. After analyzing the newly obtained event tracking data, the electronic device 100 may update the content of the scenario-based desktop according to a latest use habit of the user, to provide the user with better use experience.

2. The electronic device 100 updates the content of the scenario-based desktop according to a location.

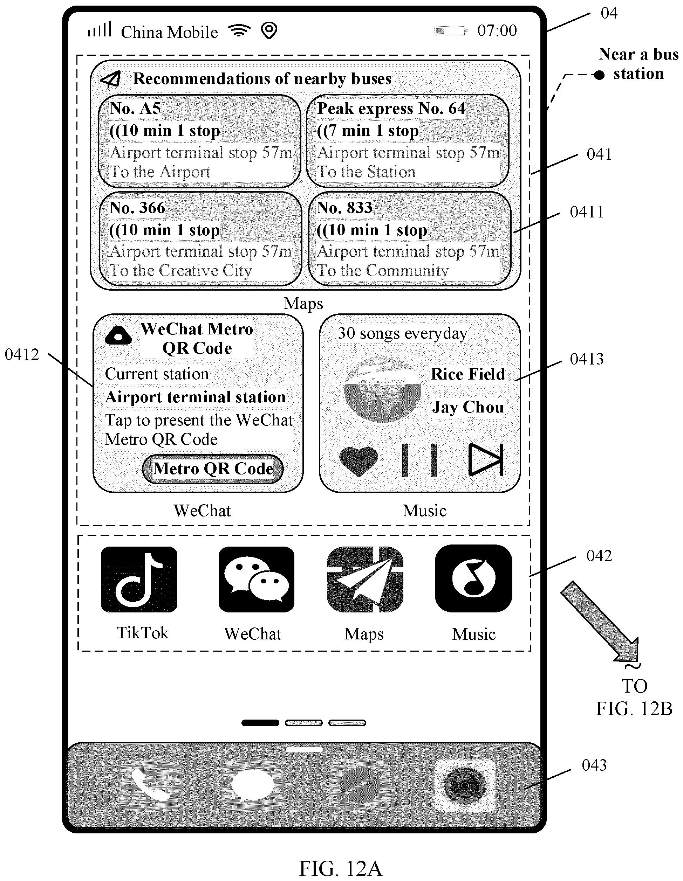

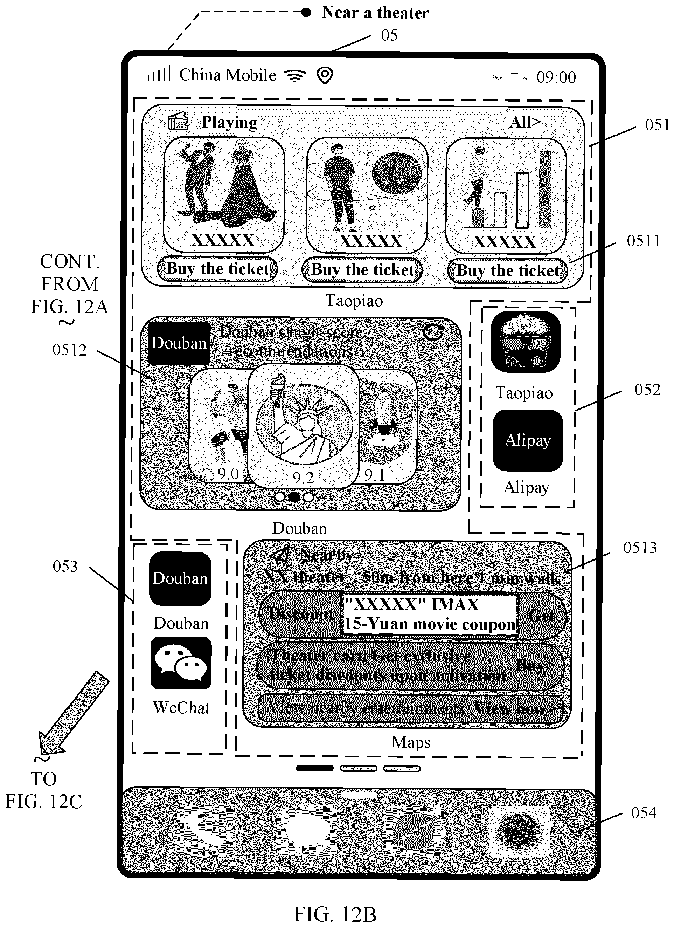

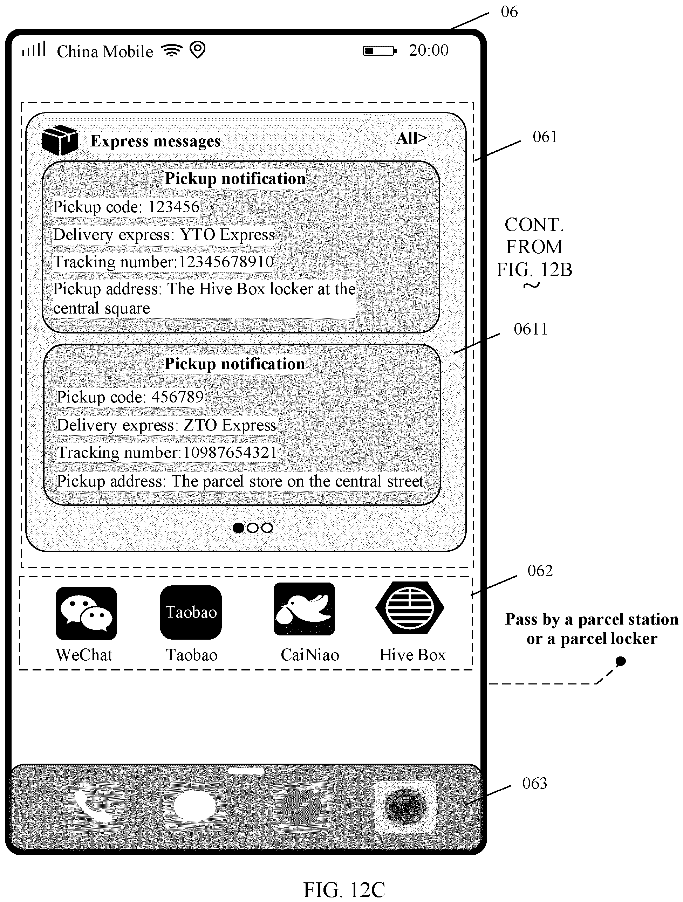

In this embodiment, the electronic device 100 may be an electronic device that has a GPS positioning function. Therefore, the electronic device 100 may obtain, in real time, location information of a current environment in which the electronic device is located, and update content of a scenario-based desktop at different locations with reference to the location information, so that the user can more quickly find an application that needs to be opened at a current location. For details, refer to FIG. 12.

As shown in FIG. 12A, a user interface 04 is a scenario-based desktop provided in an embodiment of this application, and content included in the scenario-based desktop is recommended by the electronic device 100 to the user when the user is near a bus station. The user interface 04 includes a card region 041, an application region 042, and a dock region 043.

The card region 041 may include a card 0411, a card 0412, and a card 0413. The card 0411 is a traffic recommendation card that is generated by an application "Maps" and that is used to display information about a related bus route of a bus station at which the user is currently located. The card 0412 is a card that is generated by an application "WeChat^{®}" and that is used to display information about a bus station near a location of the user and provide the user with a function of quickly opening a metro passenger QR code. The card 0413 is a player card that is generated by an application "Music" and that is used to display information about a currently played song for the user and provide the user with functions of switching a song, playing a song, and suspending song playing. Each card may respond to a user operation, so that the electronic device 100 opens an application corresponding to the card and displays a corresponding application page.

The application region 042 may include an icon of "TikTok^{®}", an icon of "WeChat^{®}", an icon of "Maps", and an icon of "Music". An icon of any application may be used for responding to a user operation, for example, a touch operation, so that the electronic device 100 starts an application corresponding to the icon.

The dock region 043 may include, for example, an icon of "Phone", an icon of "Messages", an icon of "Browser", and an icon of "Camera"; and may further include an icon of another application. This is not limited in this embodiment of this application. An icon of any application may be used for responding to a user operation, for example, a touch operation, so that the electronic device 100 starts the application corresponding to the icon. For details, refer to the foregoing related descriptions of the dock region 013.

It may be understood that the user near a bus station or a metro station may need to take the metro or bus. Therefore, the electronic device 100 may display route information related to a nearby station for the user, and provide the user with a functional card of quickly opening a passenger QR code. In addition, the user may want to listen to music or browse a short video on the metro and bus. Therefore, when the user comes close to a bus station or a metro station, the electronic device 100 may display the user interface 04 for the user, to meet a requirement of the user when taking the bus or metro.

When the user comes near a theater, the electronic device 100 may update content displayed in a card region and an application region in the scenario-based desktop. To be specific, the electronic device 100 may update the scenario-based desktop from the user interface 04 shown in FIG. 12A to the user interface 05 shown in FIG. 12B. As shown in FIG. 12B, the user interface 05 may include a card region 051, application regions 052 and 053, and a dock region 054.

The card region 051 may include a card 0511, a card 0512, and a card 0513. The card 0511 is a card that is generated by an application "Taopiao^{®}" and that is used to display information about a current hot movie and provide a quick ticket purchase channel for the user. The card 0512 is a card that is generated by an application "Douban^{®}" and that is used to display, for the user, a high-score movie selected by the public and provide the user with a selection reference. The card 0513 is a card that is generated by an application "Maps" and that is used to display information about a location of a nearby theater for the user and an activity currently provided by the theater and an entertainment project near the theater. Each card may respond to a user operation, so that the electronic device 100 opens an application corresponding to the card and displays a corresponding application page.

The application region 052 may include an icon of "Taopiao^{®}" and an icon of "Alipay^{®}". The application region 053 may include an icon of "Douban^{®}" and an icon of "WeChat"'. An icon of any application may be used for responding to a user operation, for example, a touch operation, so that the electronic device 100 starts an application corresponding to the icon.

The dock region 054 may include, for example, an icon of "Phone", an icon of "Messages", an icon of "Browser", and an icon of "Camera"; and may further include an icon of another application. This is not limited in this embodiment of this application. An icon of any application may be used for responding to a user operation, for example, a touch operation, so that the electronic device 100 starts the application corresponding to the icon. For details, refer to the foregoing related descriptions of the dock region 013.

It may be understood that when the user comes close to the theater, the user may have an entertainment requirement for watching a movie. Therefore, the electronic device 100 may display related information about a recently released movie to the user, provide the user with some high-score movies selected by the public, and provide reference information when the user selects a movie. In addition, according to a ticket purchase requirement of the user, the electronic device 100 may display, for the user, an application used for purchasing a ticket or a card generated by an application, for example, the application "Taopiao" or "WeChat". Therefore, when the user comes near the theater, the electronic device 100 may display the user interface 05 for the user, to meet a movie watching requirement of the user.

When the user comes near an express station (for example, a parcel locker or a parcel store), the electronic device 100 may update the content displayed in the card region and the application region in the scenario-based desktop again. To be specific, the electronic device 100 may update the scenario-based desktop from the user interface 05 shown in FIG. 12B to the user interface 06 shown in FIG. 12C. As shown in FIG. 12C, the user interface 06 may include a card region 061, an application region 062, and a dock region 063.

The card region 061 may include a card 0611. The card 0611 is a card that is generated by an application "CaiNiao^{®}" and that is used to display information about a parcel that has not been picked up by the user currently, for example, a pickup address, a pickup code, and a tracking number in the parcel information. The card 0611 may respond to a user operation, so that the electronic device 100 opens an application corresponding to the card and displays a corresponding application page.

The application region 062 may include an icon of "WeChat^{®}", an icon of "Taobao^{®}", an icon of "CaiNiao^{®}", and an icon of "Hive Box"'. An icon of any application may be used for responding to a user operation, for example, a touch operation, so that the electronic device 100 starts the application corresponding to the icon.

The dock region 063 may include, for example, an icon of "Phone", an icon of "Messages", an icon of "Browser", and an icon of "Camera"; and may further include an icon of another application. This is not limited in this embodiment of this application. An icon of any application may be used for responding to a user operation, for example, a touch operation, so that the electronic device 100 starts the application corresponding to the icon. For details, refer to the foregoing related descriptions of the dock region 013.

It may be understood that, when the user comes near the express station, the electronic device 100 may display, for the user, the information about the parcel that has not been picked up by the user. In addition, the electronic device 100 may further display, for the user, an application that can be used to check details about the parcel, for example, the application "Taobao^{®}" or "Hive Box^{®}", to meet a requirement of quickly picking up a parcel by the user.

3. The electronic device 100 updates the content of the scenario-based desktop based on the relationship between a previous event and a current event.

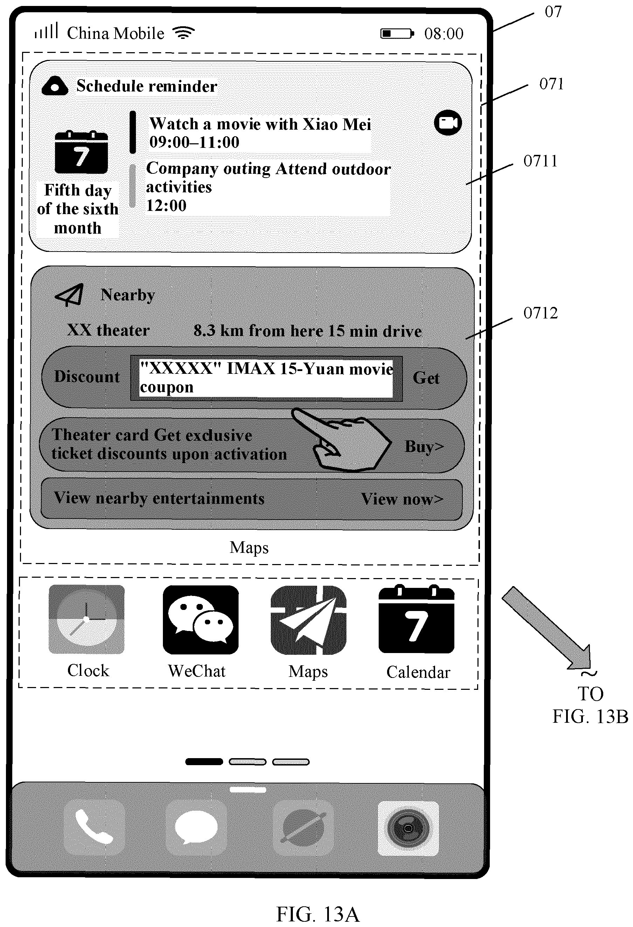

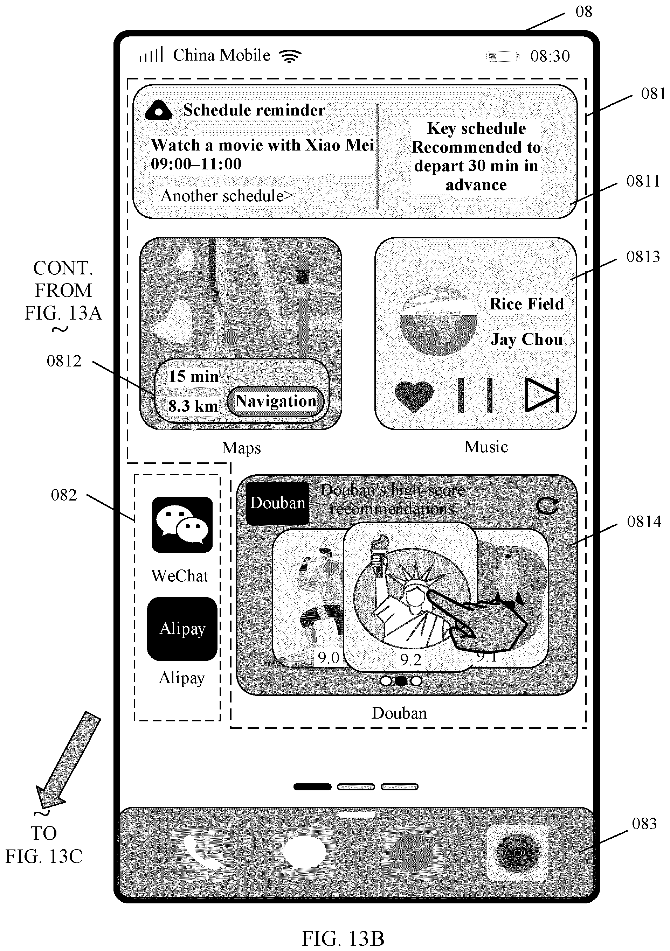

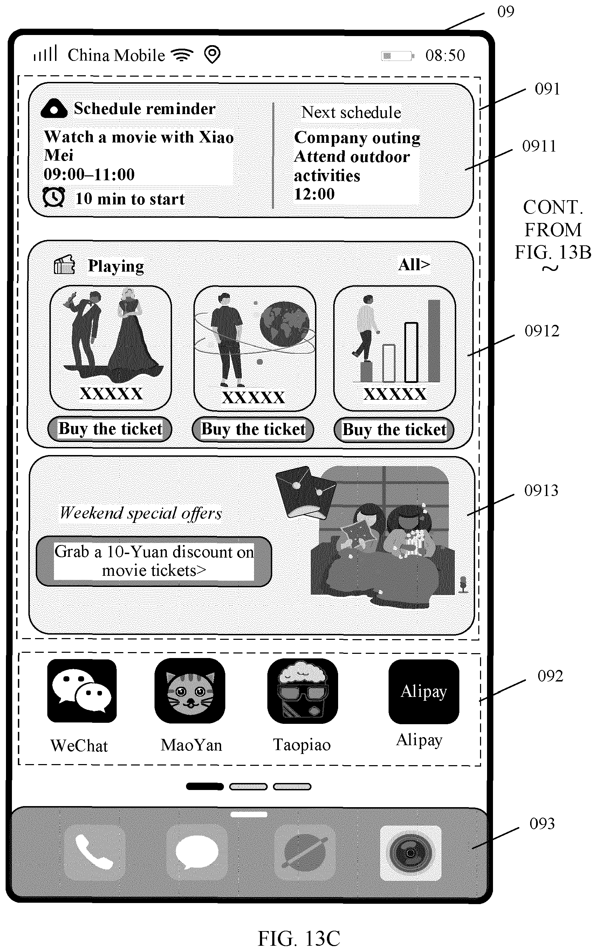

It may be understood that purposes of two times of checking the electronic device by the user may be related. For example, after the user searches for a nearby theater by using an application "Maps", the user may want to open an application "Douban^{®}" or "Meituan^{®}" to purchase a movie ticket in a next time that the user checks the electronic device. Therefore, in this embodiment, the electronic device 100 may update content of a scenario-based desktop based on an application or a card that was browsed by the user in a previous time of using the electronic device, and recommend, to the user, a card or an application that meets a current use requirement of the user. For details, refer to FIG. 13A, FIG. 13B, and FIG. 13C.

As shown in FIG. 13A, a user interface 07 is a scenario-based desktop provided in an embodiment of this application, and content included in the scenario-based desktop is recommended for the user when the electronic device 100 recognizes that a current schedule of the user includes a schedule: "Watch a movie". The user interface 07 includes a card region 071, an application region 072, and a dock region 073.

The card region 071 may include a card 0711 and a card 0712. The card 7111 is a schedule card that is generated by an application "Calendar" and that is used to display schedule information preset by the user. The card 7111 is a recommendation card that is generated by an application "Maps". The card 7112 may be a card displayed by the electronic device 100 for the user based on schedule information after the electronic device recognizes the schedule information preset by the user, that is, schedule information: "Watch a movie with Xiao Mei in 09:00-11:00" displayed on the card 7111. The card 7112 may be used to recommend, for the user, an entertainment venue such as a theater or a cineplex near a location of the user. Each card may respond to a user operation, so that the electronic device 100 opens an application corresponding to the card and displays a corresponding application page.

The application region 072 may include an icon of "Clock^{®}", an icon of "WeChat^{®}", an icon of "Maps", and an icon of "Music". An icon of any application may be used for responding to a user operation, for example, a touch operation, so that the electronic device 100 starts the application corresponding to the icon.

The dock region 743 may include, for example, an icon of "Phone", an icon of "Messages", an icon of "Browser", and an icon of "Camera"; and may further include an icon of another application. This is not limited in this embodiment of this application. An icon of any application may be used for responding to a user operation, for example, a touch operation, so that the electronic device 100 starts the application corresponding to the icon. For details, refer to the foregoing related descriptions of the dock region 013.

It may be understood that, after the electronic device 100 recognizes the schedule information: "Watch a movie with Xiao Mei in 09:00-11:00" preset by the user, before a start time of the schedule (that is, 9:00), the electronic device 100 may display a related application or card of the schedule in the scenario-based interface based on the schedule and the start time of the schedule of which the user is to be reminded. For example, the card 0711 is displayed to display information about a nearby theater to the user, to help the user make a corresponding plan for the schedule.

After the user performs an operation on a card or an application in the user interface 70, for example, a tap operation performed by the user on the card 0712 (the tap operation performed on the card 0712 may be referred to as a fifth operation in some embodiments of this application) shown in FIG. 13A, the electronic device 100 may respond to the operation and determine that the user has a plan of going to a theater recently. Correspondingly, the electronic device 100 may update content displayed in the card region and the application region in the scenario-based desktop. To be specific, the electronic device 100 may update the scenario-based desktop from the user interface 07 shown in FIG. 13A to a user interface 08 shown in FIG. 13B.

As shown in FIG. 13B, the user interface 08 may include a card region 081, an application region 082, and a dock region 083.

The card region 081 may include a card 0811, a card 0812, a card 0513, and a card 0814. The card 0812 is a card that is generated by the application "Calendar" and that is used to display the schedule information preset by the user. It can be learned from the interface 08 that time comes to 8:30 at this moment at an interval of 30 minutes to the start time of the schedule: "Watch a movie with Xiao Mei". To highlight the importance of the schedule and remind the user that the schedule is about to start, information displayed in the card 0811 is different from information displayed in the card 0711. The card 0812 is a card that is generated by the application "Maps" and that is used to display information about a location of a nearby theater and a route to the theater to the user, to help the user determine a departure time. The card 0813 is a player card that is generated by an application "Music^{®}" and that is used to play music for the user on the way to the theater. The card 0814 is a card that is generated by an application "Douban^{®}" and that is used to display, for the user, a high-score movie selected by the public and provide the user with a selection reference. Each card may respond to a user operation, so that the electronic device 100 opens an application corresponding to the card and displays a corresponding application page.

The application region 052 may include an icon of "WeChat^{®}" and an icon of "Alipay"". An icon of any application may be used for responding to a user operation, for example, a touch operation, so that the electronic device 100 starts the application corresponding to the icon.

The dock region 083 may include, for example, an icon of "Phone", an icon of "Messages", an icon of "Browser", and an icon of "Camera"; and may further include an icon of another application. This is not limited in this embodiment of this application. An icon of any application may be used for responding to a user operation, for example, a touch operation, so that the electronic device 100 starts the application corresponding to the icon. For details, refer to the foregoing related descriptions of the dock region 013.

It may be understood that, after the electronic device 100 determines that the user has the plan of going to a theater, before the user goes to the theater, the electronic device 100 may display location information of a nearby theater and display related information of a recently released movie for the user, to provide the user with some high-score movies selected by the public. For example, the card 0812 is displayed to display the information about the nearby theater, to help the user make a corresponding plan for the schedule.

After the user performs an operation on a card or an application in the user interface 80, for example, a tap operation performed by the user on the card 0814 (the tap operation performed on the card 0814 may be referred to as a sixth operation in some embodiments of this application) shown in FIG. 13B, the electronic device 100 may respond to the operation and determine that the user has a plan of watching a movie recently. Correspondingly, the electronic device may update content displayed in the card region and the application region in the scenario-based desktop. To be specific, the electronic device 100 may update the scenario-based desktop from the user interface 08 shown in FIG. 13B to a user interface 09 shown in FIG. 13C.

As shown in FIG. 13C, the user interface 09 may include a card region 091, an application region 092, and a dock region 093.

The card region 091 may include a card 0911, a card 0912, and a card 0913. The card 0911 is a card that is generated by the application "Calendar" and that is used to display the schedule information preset by the user. It can be learned from the interface 09 that time comes to 08:50 at this moment at an interval of 10 minutes to the start time of the schedule: "Watch a movie with Xiao Mei". In other words, the user may be about to execute the schedule. The card 0912 is a card that is generated by an application "Taopiao^{®}" and that is used to display information about a current hot movie and provide a quick ticket purchase channel for the user. The card 0913 is a card that is generated by an application "MaoYan^{®}" and that is used to display, for the user, information about a movie watching activity of each theater in this day. Each card may respond to a user operation, so that the electronic device 100 opens an application corresponding to the card and displays a corresponding application page.

The application region 092 may include an icon of "WeChat^{®}", an icon of "MaoYan^{®}", an icon of "Taopiao^{®}", and an icon of "Alipay^{®}". An icon of any application may be used for responding to a user operation, for example, a touch operation, so that the electronic device 100 starts the application corresponding to the icon.

The dock region 063 may include, for example, an icon of "Phone", an icon of "Messages", an icon of "Browser", and an icon of "Camera"; and may further include an icon of another application. This is not limited in this embodiment of this application. An icon of any application may be used for responding to a user operation, for example, a touch operation, so that the electronic device 100 starts the application corresponding to the icon. For details, refer to the foregoing related descriptions of the dock region 013.

It may be understood that, after the electronic device determines that the user has a movie watching requirement, the electronic device 100 may display related information of a recently released movie to the user. In addition, according to a ticket purchase requirement of the user, the electronic device 100 may display, for the user, an application used for purchasing a ticket or a card generated by an application, for example, the application "Taopiao" or "MaoYan", to meet the movie watching requirement of the user.

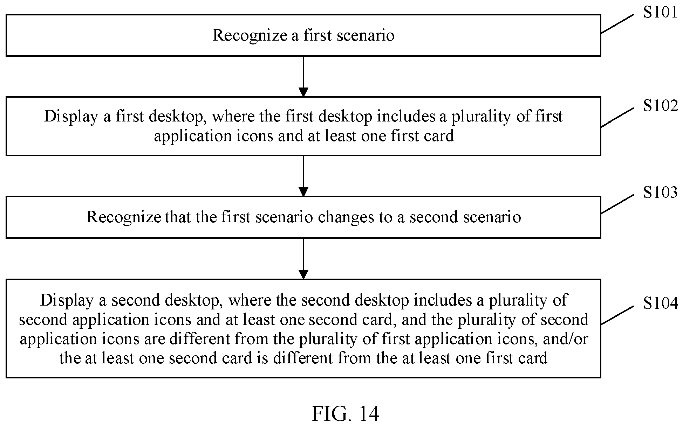

FIG. 14 is a flowchart of a display method according to this application. In the display method provided in this embodiment of this application, an electronic device may dynamically display, according to an actual requirement of a user in a current scenario, an application and a service card that may be used by the user in the current scenario, to help the user more quickly locate an application that the user needs to browse.

As shown in FIG. 14, the display method may include the following steps:
S101: Recognize a first scenario.

The electronic device recognizes the foregoing first scenario. The electronic device may be a mobile phone (mobile phone), a vehicle-mounted device (for example, an on-board unit (On Board Unit, OBU)), a tablet computer (pad), a computer with a display function (for example, a notebook computer or a palmtop computer), or the like. Specifically, the electronic device may be the electronic device 100 provided in embodiments of this application. It may be understood that a specific form of the foregoing electronic device is not limited in this application.

In addition, the foregoing electronic device may recognize the foregoing first scenario according to dimensions such as a time, a location, and a relationship between a previous event and a current event. For example, when the foregoing electronic device recognizes the foregoing first scenario based on a time, the electronic device may determine, based on a current time, what the user is accustomed to do at this time point; when the foregoing electronic device recognizes the foregoing first scenario based on a location, the electronic device may determine, based on a current location and a feature of the location, an activity that the user may currently perform; or when the foregoing electronic device recognizes the foregoing first scenario based on a location, the electronic device may determine a next specific purpose (for example, watching a movie) of the user based on a previous operation performed by the user on the electronic device (for example, opening Maps for navigation to a theater).

S102: Display a first desktop, where the first desktop includes a plurality of first application icons and at least one first card.

In this method, content displayed on the foregoing first desktop (that is, the foregoing plurality of first applications and the foregoing at least one first card) is determined based on the foregoing first scenario. In other words, the plurality of first applications are applications that the user may need to browse or open in the first scenario, and the at least one first card is a card generated by an application that the user may need to browse or open in the first scenario. The electronic device displays, according to an actual requirement of the user in the current scenario, an application and a service card that may be used by the user in a current scenario, to help the user more quickly locate an application that the user needs to browse, thereby saving time for the user.

S103: Recognize that the first scenario changes to a second scenario.

S104: Display a second desktop, where the second desktop includes a plurality of second applications and at least one second card, and the plurality of second application icons are different from the plurality of first application icons, and/or the at least one second card is different from the at least one first card.

Similarly, the plurality of second applications and the at least one second card are determined based on the foregoing second scenario. After the scenario changes, content displayed on the electronic device also changes. To be specific, the plurality of second application icons are different from the plurality of first application icons, and/or the at least one second card is different from the at least one first card.

It may be understood that, in most cases, the user checks a screen of a mobile phone with a determined purpose, and the purpose may be strongly related to factors such as a time, a location, and a personal use preference of the user. For example, the user usually checks a schedule in the morning and opens applications such as Games and Health in the evening. For another example, the user usually opens a passenger QR code near a bus station, and opens a payment code at a store. Therefore, in this method, when a scenario changes, content displayed on the desktop of the electronic device also changes as the scenario changes. In this way, the electronic device may dynamically display, based on the scenario, an application and a service card that may be used by the user in the current scenario, to further improve user experience.

It should be noted that in the method, a basis on which the foregoing electronic device determines that a scenario changes from the first scenario to the second scenario may include but is not limited to the following:

### 1. Time change

It may be understood that a schedule of the user is very likely to be regular in a common day. For example, most people get up at 7:00 am, need to leave the home and go to the company by taking a car or by driving a car in 8:00 am to 9:00 am, and get home from work after 6:00 pm. Therefore, in this implementation, the electronic device may update content of a scenario-based desktop at different times with reference to a user habit, so that the user can more quickly find an application that needs to be opened at a current time. For details, refer to the foregoing related descriptions of FIG. 11A, FIG. 11B, and FIG. 11C. Details are not described herein again.

### 2. Location change

An application that the user needs to open is usually directly related to a location of the user. For example, the user usually opens a passenger QR code near a bus station, opens a payment code at a store, and enables navigation software and the like on an expressway. Therefore, in this implementation, the electronic device may obtain, in real time, location information of a current environment in which the electronic device is located, and update content of a scenario-based desktop at different locations with reference to the location information, so that the user can more quickly find an application that needs to be opened at a current location. For details, refer to the foregoing related descriptions of FIG. 12A, FIG. 12B, and FIG. 12C. Details are not described herein again.

### 3. A user operation is received.

It may be understood that purposes of two times of checking the electronic device by the user may be related. For example, after the user searches for a nearby theater by using an application "Maps", the user may want to open an application "Douban" or "Meituan" to purchase a movie ticket in a next time that the user checks the electronic device. Therefore, in this embodiment, the electronic device may update content of a scenario-based desktop based on an application or a card that was browsed by the user in a previous time of using the electronic device, and recommend, to the user, a card or an application that meets a current use requirement of the user. For details, refer to the foregoing related descriptions of FIG. 13A, FIG. 13B, and FIG. 13C. Details are not described herein again.

Optionally, in this method, the foregoing first desktop and the foregoing second desktop may include a dock region, and the user may adjust a size of the dock region by using an application such as a pull-up operation or a pull-down operation, and a quantity of programs that can be accommodated in the dock region also increases accordingly. In this way, the user may put more applications commonly used by the user into the dock region, so that the user can directly and quickly start more applications. Optionally, after the user adjusts an area of the dock region, the electronic device may adaptively add or delete an application icon outside the dock region to provide the user with better visual experience. Optionally, when the electronic device changes an area of the dock region on the first desktop or the second desktop, the electronic device may adaptively change a display manner of a card on the first desktop or the second desktop. The display manner includes a quantity, a shape, and a card arrangement manner. In this way, the user is provided with a better browsing effect. For details, refer to the foregoing related descriptions of FIG. 7A, FIG. 7B, FIG. 7C, and FIG. 7D. Details are not described herein again.

In an optional implementation, the electronic device may perform an operation such as deleting, adding, or scaling the card on the first desktop or the second desktop in response to a user operation. Correspondingly, after the user deletes a specific card on the foregoing first desktop or the foregoing second desktop, adds a card corresponding to another application to the foregoing first desktop or the foregoing second desktop, or adjusts a shape and a size of a specific card on the foregoing first desktop or the foregoing second desktop, to ensure browsing experience of the user, the electronic device may adaptively adjust a shape and a size of another card on the foregoing first desktop or the foregoing second desktop and a specific position in a card region. For details, refer to the foregoing related descriptions of FIG. 8A to FIG. 10B. Details are not described herein again.

An embodiment of this application further provides an electronic device. The electronic device includes one or more processors and a memory.

The memory is coupled to the one or more processors. The memory is configured to store computer program code. The computer program code includes computer instructions. The one or more processors invoke the computer instructions to enable the electronic device to perform the methods shown in the foregoing embodiments.

As used in the foregoing embodiments, depending on the context, the term "when" may be interpreted as a meaning of "if", "after", "in response to determining", or "in response to detecting". Similarly, depending on the context, the phrases "when it is determined" or "if the (described condition or event) is detected" may be interpreted as "if it is determined that...", "in response to it is determined that...", "when the (described condition or event) is detected", or "in response to detection of the (described condition or event)".

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some of procedures or functions according to the embodiments of this application are produced. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device integrating one or more usable media, for example, a server or a data center. The available medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures in the methods in the foregoing embodiments may be implemented by using a computer program instructing related hardware. The program may be stored in a computer-readable storage medium. When the program is executed, the procedures in the foregoing method embodiments may be performed. The foregoing storage medium includes various media that can store program code, such as a ROM, a random access memory RAM, a magnetic disk, or an optical disc.

## Claims

1. A display method, wherein the method is applied to an electronic device and comprises:
displaying a first desktop in a first scenario, wherein the first desktop comprises a plurality of first application icons and at least one first card; and
recognizing that the first scenario changes to a second scenario, and displaying a second desktop, wherein the second desktop comprises a plurality of second application icons and at least one second card, and the plurality of second application icons are different from the plurality of first application icons, and/or the at least one second card is different from the at least one first card.

2. The method according to claim 1, wherein the first desktop comprises a first dock region, and the method further comprises:
receiving a first operation performed on the first dock region; and
displaying a third desktop in response to the first operation, wherein the third desktop comprises a second dock region, and an area of the second dock region is different from an area of the first dock region; and
when the area of the second dock region is greater than the area of the first dock region, a quantity of application icons in the second dock region is greater than a quantity of application icons in the first dock region; or when the area of the second dock region is less than the area of the first dock region, a quantity of application icons in the second dock region is less than a quantity of application icons in the first dock region.

3. The method according to claim 2, wherein the at least one first application icon of the first desktop comprises N application icons located outside the first dock region, and the third desktop comprises M application icons located outside the second dock region; and
when the area of the second dock region is greater than the area of the first dock region, N is greater than M; or when the area of the second dock region is less than the area of the first dock region, N is less than M.

4. The method according to claim 2 or 3, wherein the third desktop comprises at least one third card, the at least one third card is all or a part of cards in the at least one first card, and display manners of the at least one first card and the at least one third card are different.

5. The method according to any one of claims 1 to 4, wherein the method further comprises:
receiving a second operation performed on a fourth card, wherein the fourth card is any one of the at least one first card; and
deleting the fourth card in response to the second operation.

6. The method according to claim 5, wherein after the receiving a second operation performed on a fourth card, the method further comprises:
displaying a fourth desktop, wherein the fourth desktop comprises at least one fifth card, and display manners of the at least one fifth card and the at least one first card are different.

7. The method according to any one of claims 1 to 6, wherein the method further comprises:
receiving a third operation performed on the first desktop; and
generating a sixth card in response to the third operation.

8. The method according to claim 7, wherein after the receiving a third operation performed on the first desktop, the method further comprises:
displaying a fifth desktop, wherein the fifth desktop comprises at least one seventh card, the at least one seventh card comprises the at least one first card and the sixth card, and display manners of the at least one seventh card and the at least one first card are different.

9. The method according to any one of claims 1 to 4, wherein the method further comprises:
receiving a fourth operation performed on an eighth card, wherein the eighth card is any one of the at least one first card; and
scaling up or down the eighth card in response to the fourth operation.

10. The method according to claim 9, wherein after the receiving a fourth operation performed on an eighth card, the method further comprises:
displaying a sixth desktop, wherein the sixth desktop comprises the at least one first card, and display manners of the at least one first card on the sixth desktop and the at least one first card on the first desktop are different.

11. The method according to any one of claims 1 to 10, wherein the recognizing that the first scenario changes to a second scenario comprises:
recognizing that a time changes from a first moment to a second moment, the first moment corresponds to the first scenario, and the second moment corresponds to the second scenario; or
recognizing that a location of the electronic device changes from a first location to a second location, wherein the first location corresponds to the first scenario, and the second location corresponds to the second scenario; or
recognizing at a third moment that a user performs a fifth operation on the electronic device, and recognizing at a fourth moment that the user performs a sixth operation on the electronic device, wherein the fifth operation performed by the user on the electronic device corresponds to the first scenario, and the sixth operation performed by the user on the electronic device corresponds to the second scenario.

12. An electronic device, wherein the electronic device comprises one or more processors, a memory, and a display; and
the memory is coupled to the one or more processors, the memory is configured to store computer program code, the computer program code comprises computer instructions, and the one or more processors invoke the computer instructions to enable the electronic device to perform the method according to any one of claims 1 to 11.

13. A chip system, wherein the chip system is used in an electronic device, the chip system comprises one or more processors, and the processor is configured to invoke computer instructions to enable the electronic device to perform the method according to any one of claims 1 to 11.

14. A computer-readable storage medium, comprising instructions, wherein when the instructions are run on an electronic device, the electronic device is enabled to perform the method according to any one of claims 1 to 11.
